# EUROPEAN PATENT SPECIFICATION

(11) **EP 2 661 068 B1**
(45) Date of publication and mention of the grant of the patent: **06.09.2017**
(21) Application number: 13165243.0
(22) Date of filing: 24.04.2013
(51) Int. Cl.: H04N 1/00, G06F 3/00, G06F 3/01

(54) **Mobile terminal and control method thereof**
Mobiles Endgerät und Steuerungsverfahren dafür
Terminal mobile et son procédé de contrôle

(30) Priority: 30.04.2012 KR 20120045585
(43) Date of publication of application: 06.11.2013
(73) Proprietor: LG Electronics, Inc., Seoul, 150-721 (KR)
(72) Inventor: Jeon, Taeyoung, 153-801 SEOUL (KR); Na, Sungchae, 153-801 SEOUL (KR)
(74) Representative: Cabinet Plasseraud

(56) References cited:
- EP-A2- 1 923 778
- JP-A- 2007 312 039
- US-A1- 2008 168 404
- US-A1- 2009 303 176
- US-A1- 2011 055 774
- US-A1- 2011 102 455
- US-A1- 2011 164 105
- US-A1- 2012 038 675

## Description

### BACKGROUND OF THE INVENTION

### Field of the Invention

The present invention relates to a mobile terminal and corresponding method for effectively select a specific image from images captured using different cameras on the mobile terminal.

### Discussion of the Related Art

Terminals now function as multimedia players having multiple functions for capturing pictures or moving images, playing music, moving image files and games and receiving broadcasting programs.

Terminals can be categorized as mobile terminals and stationary terminals. The mobile terminals can be further categorized into handheld terminals and vehicle mount terminals.

A terminal may include a plurality of cameras. However, it is often difficult for the user to operate the different cameras, especially in a small sized mobile terminal. US20110164105 disclosing a mobile terminal having two cameras and switching cameras according to a voice or a gesture input.

### SUMMARY OF THE INVENTION

Accordingly, one object of the present invention is to address the above noted and other problems with the related art.

Another object of the present invention is to provide a mobile terminal and a method of controlling the same for effectively selecting and recording a specific image from a plurality of images captured using a plurality of cameras.

To achieve these and other advantages and in accordance with the purpose of the present invention, as embodied and broadly described herein, the present invention provides a mobile terminal according to the current claim 1.

Preferably, the controller may display at least one of the first and second images on the display based on the image selection signal.

Wherein the sensed motion included in the image selection signal corresponds to a tilting angle of the body, and preferably, the controller may change the stored image from the first image to the second image based on the tilting angle of the body.

Preferably, the controller may capture the first and second images such that width/length ratios of the first and second images correspond to each other.

Wherein, when the width/length ratios of the first and second images differ from each other, the controller may display a guide indicator on at least one of the first and second images indicating that an image is captured at the same width/length ratio as that of the other image according to the guide indicator.

Preferably, the controller may display the first and second images in first and second display areas of the display, respectively, wherein the image selection signal corresponds to an indication of one of the first and second display areas, and wherein the controller may store an image displayed in a wider display area from among the first and second display areas.

Preferably, the controller may store a previously recorded image regardless of display areas including the first and second images displayed on the display.

Preferably, the controller may store an image from among the first and second images including a person corresponding to the acquired voice input.

Preferably, the controller may enlarge and store the image of the person corresponding to the acquired voice.

Preferably, the controller may display an indicator indicating the person corresponding to the acquired voice on the display.

Wherein the input gesture included in the image selection signal corresponds to a shielding gesture input of shielding at least one of the first and second cameras such that the at least one of the first and second cameras does not perform a normal photographing operation.

Wherein, upon the shielding gesture of shielding at least one of the first and second cameras, the controller may record the image captured by the other camera.

Preferably, the controller may interrupt recording of an image upon the shielding gesture of shielding both the first and second cameras.

Preferably, the controller may store event information including information about when the image selection signal is generated along with the first and second images.

The present invention also provides a corresponding method of controlling the mobile terminal. A method of controlling a mobile terminal according to claim 14.

The method may further comprise displaying at least one of the first and second images on the display based on the image selection signal.

Wherein the sensed motion included in the image selection signal corresponds to a tilting angle of the body, and wherein the method further comprises changing the stored image from the first image to the second image based on the tilting angle of the body.

The method may further comprise, capturing the first and second images such that width/length ratios of the first and second images correspond to each other.

Wherein, when the width/length ratios of the first and second images differ from each other, the method further comprises displaying a guide indicator on at least one of the first and second images indicating that an image is captured at the same width/length ratio as that of the other image according to the guide indicator.

The method may further comprise displaying the first and second images in first and second display areas of the the display, respectively, wherein the image selection signal corresponds to an indication of one of the first and second display areas; and storing an image displayed in a wider display area from among the first and second display areas.

Further scope of applicability of the present invention will become apparent from the detailed description given hereinafter. However, it should be understood that the detailed description and specific examples, while indicating preferred embodiments of the invention, are given by illustration.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention.
FIG. 1 is a block diagram of a mobile terminal according to an embodiment of the present invention;
FIG. 2A is a front perspective view of the mobile terminal according to an embodiment of the present invention;
FIG. 2B is a rear perspective view of the mobile terminal according to an embodiment of the present invention;
FIG. 3 is a view for explaining a proximity depth of a proximity sensor;
FIG. 4 includes overviews of mobile terminals according to embodiments of the present invention;
FIG. 5 is a flowchart illustrating a method of controlling the mobile terminal shown in FIG. 1;
FIG. 6 is a diagram showing photographing directions of first and second cameras of the mobile terminal shown in FIG. 1;
FIG. 7 is a flowchart illustrating a method of selecting at least one of images captured using the first and second cameras of the mobile terminal shown in FIG. 6;
FIGS. 8 to 13 include display screens illustrating operations of changing first and second images in the mobile terminal shown in FIG. 1;
FIGS. 14 to 16 are overviews illustrating a method of recording an image in the mobile terminal shown in FIG. 1;
FIGS. 17 to 23 include display screens illustrating a method of changing the first and second images in the mobile terminal shown in FIG. 1;
FIGS. 24 to 27 includes overviews illustrating a method of changing the first and second images according to voice and a gesture in the mobile terminal shown in FIG. 1;
FIGS. 28 to 30 illustrate an operation of the mobile terminal shown in FIG. 1 in a conference mode;
FIGS. 31 to 35 includes overviews illustrating a method of controlling the mobile terminal shown in FIG. 1 according to a gesture performed on a camera; and
FIG. 36 is an overview illustrating a recording form in the mobile terminal shown in FIG. 1.

### DETAILED DESCRIPTION OF EMBODIMENTS OF THE PRESENT INVENTION

Arrangements and embodiments will now be described more fully with reference to the accompanying drawings, in which different embodiments are shown. Embodiments may, however, be embodied in many different forms and are not limited to embodiments set forth herein; rather, embodiments may be provided so that this disclosure will be thorough and complete, and will fully convey the concept to those skilled in the art.

The mobile terminal may include a cellular phone, a smart phone, a laptop computer, a digital broadcasting terminal, personal digital assistants (PDA), a portable multimedia player (PMP), a navigation system and/or so on.

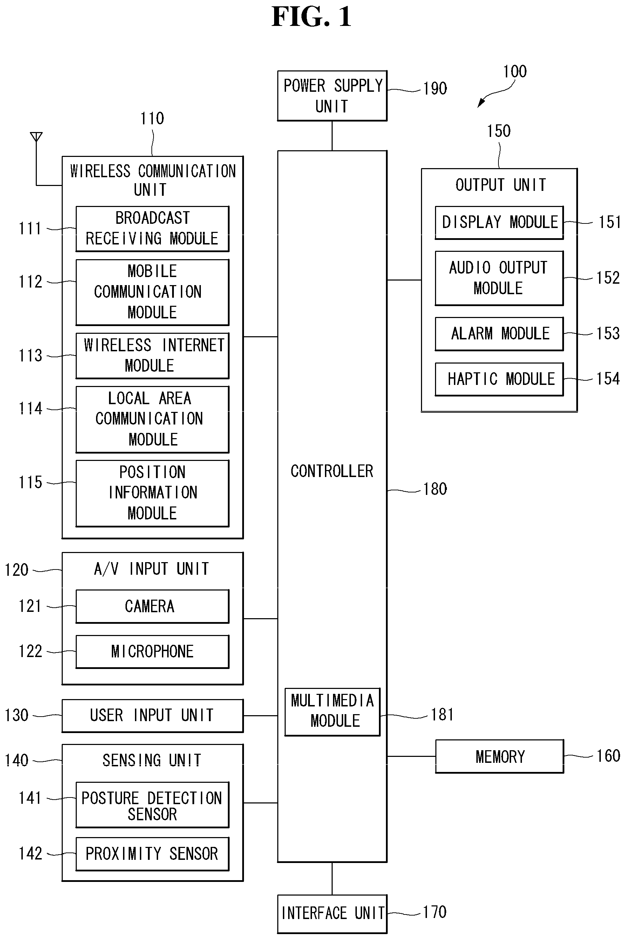

FIG. 1 is a block diagram of a mobile terminal 100 according to an embodiment of the present invention. As shown, the mobile terminal 100 includes a wireless communication unit 110 (or radio communication unit), an audio/video (A/V) input unit 120, a user input unit 130, a sensing unit 140, an output unit 150, a memory 160, an interface 170, a controller 180, and a power supply 190. The components shown in FIG. 1 may vary.

The wireless communication unit 110 may include at least one module that enables radio communication between the mobile terminal 100 and a radio communication system or between the mobile terminal 100 and a network in which the mobile terminal 100 is located. For example, the wireless communication unit 110 may include a broadcasting receiving module 111, a mobile communication module 112, a wireless Internet module 113, a short range communication module 114 (or local area communication module), and a location information module 115 (or position information module).

The broadcasting receiving module 111 may receive broadcasting signals and/or broadcasting related information from an external broadcasting management server through a broadcasting channel. The broadcasting channel may include a satellite channel and a terrestrial channel, and the broadcasting management server may be a server that generates and transmits broadcasting signals and/or broadcasting related information or a server that receives previously created broadcasting signals and/or broadcasting related information and transmits the broadcasting signals and/or broadcasting related information to a terminal.

The broadcasting signals may include not only TV broadcasting signals, radio broadcasting signals, and data broadcasting signals but also signals in the form of a combination of a TV broadcasting signal and a radio broadcasting signal. The broadcasting related information may be information on a broadcasting channel, a broadcasting program or a broadcasting service provider, and may be provided even through a mobile communication network. In the latter case, the broadcasting related information may be received by the mobile communication module 112.

The broadcasting related information may exist in various forms. For example, the broadcasting related information may exist in the form of an electronic program guide (EPG) of a digital multimedia broadcasting (DMB) system or in the form of an electronic service guide (ESG) of a digital video broadcast-handheld (DVB-H) system.

The broadcasting receiving module 111 may receive broadcasting signals using various broadcasting systems. More particularly, the broadcasting receiving module 111 may receive digital broadcasting signals using digital broadcasting systems such as a digital multimedia broadcasting-terrestrial (DMB-T) system, a digital multimedia broadcasting-satellite (DMB-S) system, a media forward link only (MediaFLO) system, a DVB-H and integrated services digital broadcast-terrestrial (ISDB-T) systems. The broadcasting receiving module 111 may receive signals from broadcasting systems providing broadcasting signals other than the above-described digital broadcasting systems.

The broadcasting signals and/or broadcasting related information received through the broadcasting receiving module 111 may be stored in the memory 160. The mobile communication module 112 may transmit/receive a radio signal to/from at least one of a base station, an external terminal and a server on a mobile communication network. The radio signal may include a voice call signal, a video telephony call signal or data in various forms according to transmission and reception of text/multimedia messages.

The wireless Internet module 113 may correspond to a module for wireless Internet access and may be included in the mobile terminal 100 or may be externally attached to the mobile terminal 100. Wireless LAN (WLAN or Wi-Fi), wireless broadband (Wibro), world interoperability for microwave access (Wimax), high speed downlink packet access (HSDPA) and so on may be used as a wireless Internet technique.

The short range communication module 114 may correspond to a module for short range communication. Further, Bluetooth®, radio frequency identification (RFID), infrared data association (IrDA), ultra wideband (UWB) and/or ZigBee® may be used as a short range communication technique.

The location information module 115 may confirm or obtain a location or a position of the mobile terminal 100. The location information module 115 may obtain position information by using a global navigation satellite system (GNSS). The GNSS is a terminology describing a radio navigation satellite system that revolves around the earth and transmits reference signals to predetermined types of radio navigation receivers such that the radio navigation receivers can determine their positions on the earth's surface or near the earth's surface. The GNSS may include a global positioning system (GPS) of the United States, Galileo of Europe, a global orbiting navigational satellite system (GLONASS) of Russia, COMPASS of China, and a quasi-zenith satellite system (QZSS) of Japan, for example.

A global positioning system (GPS) module is a representative example of the location information module 115. The GPS module may calculate information on distances between one point or object and at least three satellites and information on a time when distance information is measured and apply trigonometry to the obtained distance information to obtain three-dimensional position information on the point or object according to latitude, longitude and altitude at a predetermined time.

A method of calculating position and time information using three satellites and correcting the calculated position and time information using another satellite may also be used. Additionally, the GPS module may continuously calculate a current position in real time and calculate velocity information using the location or position information.

The A/V input unit 120 may input (or receive) an audio signal and/or a video signal. The A/V input unit 120 may include a camera 121 and a microphone 122. The camera 121 may process image frames of still images or moving images obtained by an image sensor in a video telephony mode or a photographing mode. The processed image frames may be displayed on a display 151, which may be a touch screen.

The image frames processed by the camera 121 may be stored in the memory 160 or may be transmitted to an external device through the wireless communication unit 110. The mobile terminal 100 may also include at least two cameras 121.

The microphone 122 may receive an external audio signal in a call mode, a recording mode and/or a speech recognition mode, and the microphone 122 may process the received audio signal into electric audio data. The audio data may then be converted into a form that can be transmitted to a mobile communication base station through the mobile communication module 112 and output in the call mode. The microphone 122 may employ various noise removal algorithms (or noise canceling algorithm) for removing or reducing noise generated when the external audio signal is received.

The user input unit 130 may receive input data for controlling operation of the mobile terminal 100 from a user. The user input unit 130 may include a keypad, a dome switch, a touch pad (constant voltage/capacitance), a jog wheel, a jog switch and/or so on.

The sensing unit 140 may sense a current state of the mobile terminal 100, such as an open/close state of the mobile terminal 100, a position of the mobile terminal 100, whether a user touches the mobile terminal 100, a direction of the mobile terminal 100, and acceleration/deceleration of the mobile terminal 100, and the sensing unit 140 may generate a sensing signal for controlling operation of the mobile terminal 100. For example, in an example of a slide phone, the sensing unit 140 may sense whether the slide phone is opened or closed. Further, the sensing unit 140 may sense whether the power supply 190 supplies power and/or whether the interface 170 is connected to an external device. The sensing unit 140 may also include a proximity sensor 141. The sensing unit 140 may sense a motion of the mobile terminal 100.

A posture detection sensor 142 is also included that can detect a movement and/or posture of the mobile terminal 100. Thus, if the user moves the terminal 100, the controller 180 can recognize the movement via the posture detection sensor 142.

The output unit 150 may generate visual, auditory and/or tactile output, and the output unit 150 may include the display 151, an audio output module 152, an alarm 153 and a haptic module 154. The display 151 may display information processed by the mobile terminal 100. The display 151 may display a user interface (UI) and/or a graphic user interface (GUI) related to a telephone call when the mobile terminal 100 is in the call mode. The display 151 may also display a captured and/or received image, a UI or a GUI when the mobile terminal 100 is in the video telephony mode or the photographing mode.

The display 151 may include at least one of a liquid crystal display, a thin film transistor liquid crystal display, an organic light-emitting diode display, a flexible display and/or a three-dimensional display. The display 151 may be of a transparent type or a light transmissive type. That is, the display 151 may include a transparent display.

The transparent display may be a transparent liquid crystal display. A rear structure of the display 151 may also be of a light transmissive type. Accordingly, a user may see an object located behind the body (of the mobile terminal 100) through the transparent area of the body of the mobile terminal 100 that is occupied by the display 151.

The mobile terminal 100 may also include at least two displays 151. For example, the mobile terminal 100 may include a plurality of displays 151 that are arranged on a single face at a predetermined distance or integrated displays. The plurality of displays 151 may also be arranged on different sides.

When the display 151 and a sensor sensing touch (hereafter referred to as a touch sensor) form a layered structure that is referred to as a touch screen, the display 151 may be used as an input device in addition to an output device. The touch sensor may be in the form of a touch film, a touch sheet, and/or a touch pad, for example.

The touch sensor may convert a variation in pressure applied to a specific portion of the display 151 or a variation in capacitance generated at a specific portion of the display 151 into an electric input signal. The touch sensor may sense pressure of touch as well as position and area of the touch.

When the user applies a touch input to the touch sensor, a signal corresponding to the touch input may be transmitted to a touch controller. The touch controller may then process the signal and transmit data corresponding to the processed signal to the controller 180. Accordingly, the controller 180 may detect a touched portion of the display 151.

A proximity sensor 141 of the sensing unit 140 may be located in an internal region of the mobile terminal 100, surrounded by the touch screen, and/or near the touch screen. The proximity sensor 141 may sense an object approaching a predetermined sensing face or an object located near the proximity sensor 141 using an electromagnetic force or infrared rays without having mechanical contact. The proximity sensor 141 may have a lifetime longer than a contact sensor and may thus have a wide application in the mobile terminal 100.

The proximity sensor 141 may include a transmission type photo-electric sensor, a direct reflection type photo-electric sensor, a mirror reflection type photo-electric sensor, a high-frequency oscillating proximity sensor, a capacitive proximity sensor, a magnetic proximity sensor, and/or an infrared proximity sensor. A capacitive touch screen may be constructed such that proximity of a pointer is detected through a variation in an electric field according to the proximity of the pointer. The touch screen (touch sensor) may be classified as a proximity sensor 141.

For ease of explanation, an action of the pointer approaching the touch screen without actually touching the touch screen may be referred to as a proximity touch and an action of bringing the pointer into contact with the touch screen may be referred to as a contact touch. The proximity touch point of the pointer on the touch screen may correspond to a point of the touch screen at which the pointer is perpendicular to the touch screen.

The proximity sensor 141 may sense the proximity touch and a proximity touch pattern (e.g., a proximity touch distance, a proximity touch direction, a proximity touch velocity, a proximity touch time, a proximity touch position, a proximity touch moving state, etc.). Information corresponding to the sensed proximity touch action and proximity touch pattern may then be displayed on the touch screen.

The audio output module 152 may output audio data received from the wireless communication unit 110 or stored in the memory 160 in a call signal receiving mode, a telephone call mode or a recording mode, a speech recognition mode and a broadcasting receiving mode. The audio output module 152 may output audio signals related to functions, such as a call signal incoming tone and a message incoming tone, performed in the mobile terminal 100. The audio output module 152 may include a receiver, a speaker, a buzzer, and/or the like. The audio output module 152 may output sounds through an earphone jack. The user may hear the sounds by connecting an earphone to the earphone jack.

The alarm 153 may output a signal for indicating generation of an event of the mobile terminal 100. For example, an alarm may be generated when receiving a call signal, receiving a message, inputting a key signal, and/or inputting a touch. The alarm 153 may also output signals in forms different from video signals or audio signals, for example, a signal for indicating generation of an event through vibration. The video signals and/or the audio signals may also be output through the display 151 or the audio output module 152.

The haptic module 154 may generate various haptic effects that the user can feel. One example of the haptic effects is vibration. An intensity and/or pattern of vibration generated by the haptic module 154 may also be controlled. For example, different vibrations may be combined and output or may be sequentially output.

The haptic module 154 may generate a variety of haptic effects including an effect of stimulus according to an arrangement of pins vertically moving against a contact skin surface, an effect of stimulus according to a jet force or sucking force of air through a jet hole or a sucking hole, an effect of stimulus of rubbing the skin, an effect of stimulus according to contact of an electrode, an effect of stimulus using an electrostatic force, and an effect according to a reproduction of cold and warmth using an element capable of absorbing or radiating heat in addition to vibrations.

The haptic module 154 may not only transmit haptic effects through direct contact but may also allow the user to feel haptic effects through a kinesthetic sense of the user's fingers or arms. The mobile terminal 100 may also include a plurality of haptic modules 154.

The memory 160 may store a program for operations of the controller 180 and/or temporarily store input/output data such as a phone book, messages, still images, and/or moving images. The memory 160 may also store data about vibrations and sounds in various patterns that are output from when a touch input is applied to the touch screen.

The memory 160 may include at least a flash memory, a hard disk type memory, a multimedia card micro type memory, a card type memory, such as SD or XD memory, a random access memory (RAM), a static RAM (SRAM), a read-only memory (ROM), an electrically erasable programmable ROM (EEPROM), a programmable ROM (PROM) magnetic memory, a magnetic disk and/or an optical disk. The mobile terminal 100 may also operate in relation to a web storage that performs a storing function of the memory 160 on the Internet.

The interface 170 may serve as a path to external devices connected to the mobile terminal 100. The interface 170 may receive data from the external devices or power and transmit the data or power to internal components of the mobile terminal 100 or transmit data of the mobile terminal 100 to the external devices. For example, the interface 170 may include a wired/wireless headset port, an external charger port, a wired/wireless data port, a memory card port, a port for connecting a device having a user identification module, an audio I/O port, a video I/O port, and/or an earphone port.

The interface 170 may also interface with a user identification module that is a chip that stores information for authenticating authority to use the mobile terminal 100. For example, the user identification module may be a user identify module (UIM), a subscriber identify module (SIM) and/or a universal subscriber identify module (USIM). An identification device (including the user identification module) may also be manufactured in the form of a smart card. Accordingly, the identification device may be connected to the mobile terminal 100 through a port of the interface 170.

The interface 170 may also be a path through which power from an external cradle is provided to the mobile terminal 100 when the mobile terminal 100 is connected to the external cradle or a path through which various command signals input by the user through the cradle are transmitted to the mobile terminal 100. The various command signals or power input from the cradle may be used as signals for confirming whether the mobile terminal 100 is correctly set in the cradle.

The controller 180 may control overall operations of the mobile terminal 100. For example, the controller 180 may perform control and processing for voice communication, data communication and/or video telephony. The controller 180 may also include a multimedia module 181 for playing multimedia. The multimedia module 181 may be included in the controller 180 or may be separated from the controller 180.

The controller 180 may perform a pattern recognition process capable of recognizing handwriting input or picture-drawing input applied to the touch screen as characters or images. The power supply 190 may receive external power and internal power and provide power required for operations of the components of the mobile terminal 100 under control of the controller 180.

According to a hardware implementation, embodiments may be implemented using at least one of application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and/or electrical units for executing functions. Embodiments may be implemented by the controller 180.

According to a software implementation, embodiments such as procedures or functions may be implemented with a separate software module that executes at least one function or operation. Software codes may be implemented according to a software application written in an appropriate software language. The software codes may be stored in the memory 160 and executed by the controller 180.

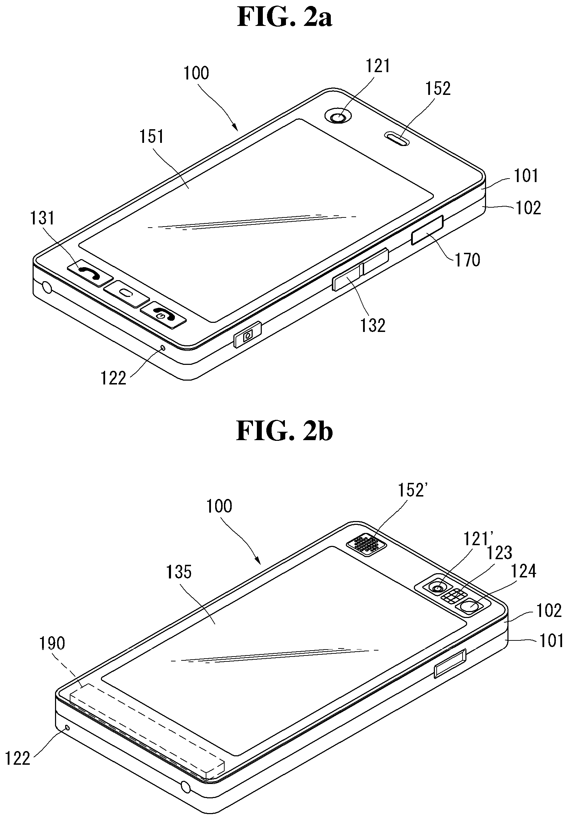

Next, FIG. 2a is a front perspective view of a mobile terminal 100 (or a handheld terminal) according to an embodiment of the present invention. The mobile terminal 100 may be a bar type terminal body. However, embodiments are not limited to a bar type terminal and may be applied to terminals of various types including slide type, folder type, swing type and/or swivel type terminals having at least two bodies that are relatively movably combined.

The terminal body may include a case (a casing, a housing, a cover, etc.) that forms an exterior of the mobile terminal 100. In this embodiment, the case is divided into a front case 101 and a rear case 102. Various electronic components may be arranged in the space formed between the front case 101 and the rear case 102. At least one middle case may be additionally provided between the front case 101 and the rear case 102.

The cases may be formed of plastics through injection molding or made of a metal material such as stainless steel (STS) or titanium (Ti).

The display 151, the audio output unit 152, the camera 121, the user input unit 130/131 and 132, the microphone 122 and the interface 170 may be arranged (or provided) in the terminal body, and more specifically may be arranged (or provided) in the front case 101.

The display 151 may occupy most of the main face of the front case 101. The audio output unit 152 and the camera 121 may be arranged in a region in proximity to one of both ends of the display 151 and the user input unit 131, and the microphone 122 may be located in a region in proximity to another end of the display 151. The user input unit 132 and the interface 170 may be arranged (or provided) on sides of the front case 101 and the rear case 102.

The user input unit 130 may receive commands for controlling operation of the mobile terminal 100, and may include a plurality of operating units 131 and 132. The operating units 131 and 132 may be referred to as manipulating portions and may employ any tactile manner in which a user operates the operating units 131 and 132 while having tactile feeling.

The first and second operating units 131 and 132 may receive various inputs. For example, the first operating unit 131 may receive commands such as start, end and scroll and the second operating unit 132 may receive commands such as control of a volume of sound output from the audio output unit 152 or conversion of the display 151 to a touch recognition mode.

FIG. 2b is a rear perspective view of the mobile terminal (shown in FIG. 2a) according to an embodiment of the present invention.

Referring to FIG. 2b, a camera 121' may be additionally attached to the rear side of the terminal body (i.e., the rear case 102). The camera 121' may have a photographing direction opposite to that of the camera 121 and may have pixels different from those of the camera 121.

For example, it may be desirable that the camera 121 has low pixels such that the camera 121 may capture an image of a face of a user and transmit the image to a receiving part in case of video telephony while the camera 121' has high pixels because the camera 121' captures an image of a general object and does not immediately transmit the image in many cases. The cameras 121 and 121' may be attached (or provided) to the terminal body such that the cameras 121 and 121' may rotate or pop-up.

A flash bulb 123 and a mirror 124 may be additionally provided in proximity to the camera 121'. The flash bulb 123 may light an object when the camera 121' takes a picture of the object. The mirror 124 may be used for the user to look at his/her face in the mirror when the user wants to self-photograph himself/herself using the camera 121'.

An audio output unit 152' may be additionally provided on the rear side of the terminal body. The audio output unit 152' may achieve a stereo function with the audio output unit 152 (shown in FIG. 2a) and may be used for a speaker phone mode when the terminal is used for a telephone call.

A broadcasting signal receiving antenna may be additionally attached (or provided) to the side of the terminal body in addition to an antenna for telephone calls. The antenna constructing a part of the broadcasting receiving module 111 (shown in FIG. 1) may be set in the terminal body such that the antenna may be pulled out of the terminal body.

The power supply 190 for providing power to the mobile terminal 100 may be set in the terminal body. The power supply 190 may be included in the terminal body or may be detachably attached to the terminal body.

A touch pad 135 for sensing touch may be attached to the rear case 102. The touch pad 135 may be of a light transmission type, such as the display 151. In this example, if the display 151 outputs visual information through both sides thereof, the visual information may be recognized (or determined) by the touch pad 135. The information output through both sides of the display 151 may be controlled by the touch pad 135. Otherwise, a display may be additionally attached (or provided) to the touch pad 135 such that a touch screen may be arranged (or provided) even in the rear case 102.

The touch pad 135 may operate in connection with the display 151 of the front case 101. The touch pad 135 may be located in parallel with the display 151 behind the display 151. The touch panel 135 may be identical to or smaller than the display 151 in size.

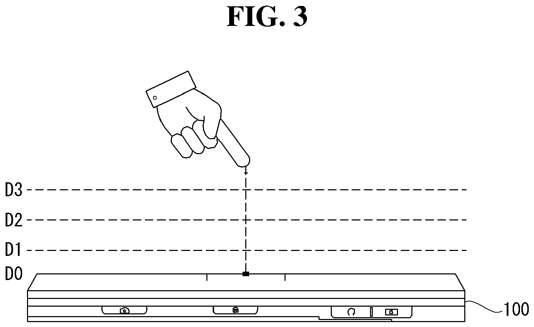

Next, FIG. 3 is a view for explaining a proximity depth of a proximity sensor. As shown in FIG. 3, when a pointer (such as a user's finger) approaches the touch screen, the proximity sensor located inside or near the touch screen may sense the approach of the pointer, and may output a proximity signal.

The proximity sensor may be constructed such that the proximity sensor outputs a proximity signal according to a distance between the pointer approaching the touch screen and the touch screen (referred to as "proximity depth").

The distance in which the proximity signal is output when the pointer approaches the touch screen may be referred to as a detection distance. The proximity depth may be determined by using a plurality of proximity sensors having different detection distances and by comparing proximity signals respectively output from the proximity sensors.

FIG. 3 also shows a section of the touch screen in which proximity sensors capable of sensing three proximity depths may be provided. Proximity sensors capable of sensing less than three or more than four proximity depths may be provided in the touch screen.

More specifically, when the pointer completely contacts the touch screen (DO), it may be recognized as contact touch. When the pointer is located within a distance D1 from the touch screen, it may be recognized as a proximity touch of a first proximity depth. When the pointer is located in a range between the distance D1 and a distance D2 from the touch screen, it may be recognized as a proximity touch of a second proximity depth.

When the pointer is located in a range between the distance D2 and a distance D3 from the touch screen, it may be recognized as a proximity touch of a third proximity depth. When the pointer is located greater than the distance D3 from the touch screen, it may be recognized as cancellation of the proximity touch.

Accordingly, the controller 180 may recognize the proximity touch as various input signals according to proximity distance and proximity position of the pointer with respect to the touch screen, and the controller 810 may perform various operation controls according to the input signals.

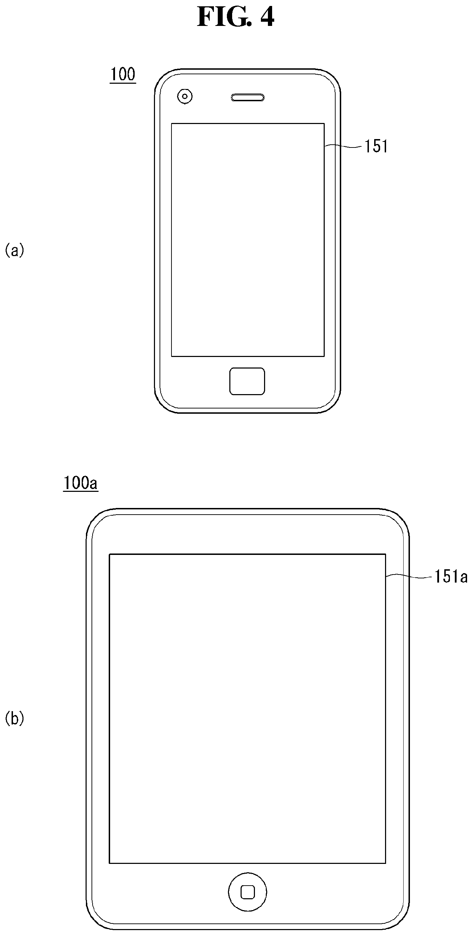

FIG. 4 shows different mobile terminals including the mobile terminal shown in FIG. 1. As shown in FIG. 4, the present invention can be applied to various types of mobile terminals 100 and 100a.

Referring to FIG. 4(a), the mobile terminal 100 may include the display 151. For example, the present invention can be applied to the mobile terminal 100 as large as the user can touch the display 151 with a hand that grips the mobile terminal 100.

Referring to FIG. 4(b), the mobile terminal 100a may include a larger display 151a. For example, the present invention can be applied to the mobile terminal 100a as large as the user cannot touch the display 151a with a hand that grips the mobile terminal 100a.

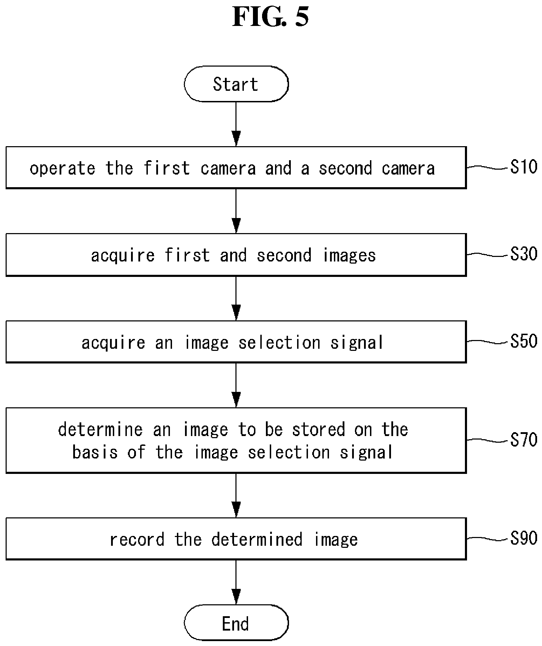

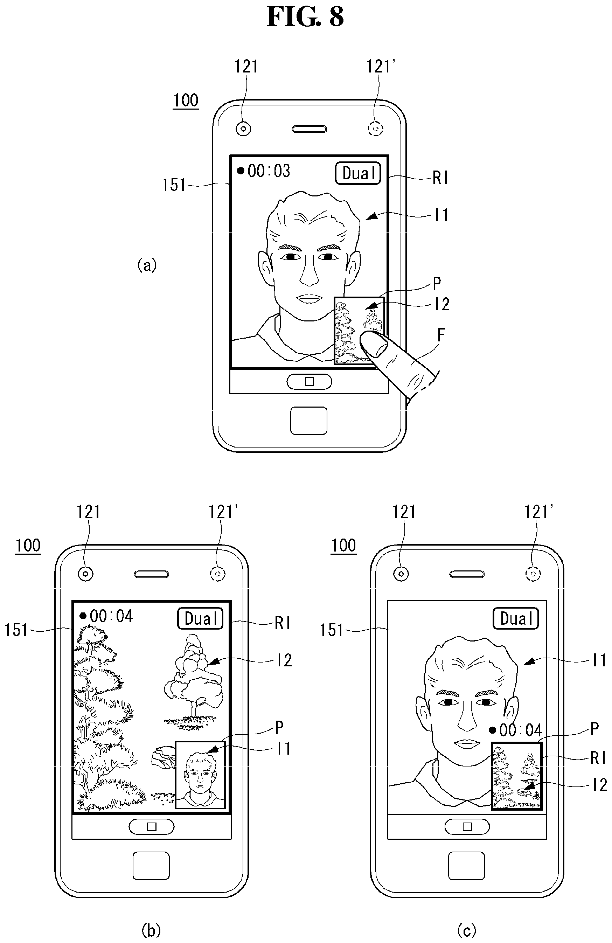

Next, FIG. 5 is a flowchart illustrating operations of the mobile terminal shown in FIG. 1. Referring to FIG. 5, the controller 180 of the mobile terminal 100 according to an embodiment of the present invention may operate the first camera 121 and the second camera 121' (S10) and acquire first and second images (I1 and I2 shown in FIG. 8) (S20).

The first and second cameras 121 and 121' may be respectively provided to one side and opposite side of the body of the mobile terminal 100. For example, the first camera 121 can be provided to the front side of the mobile terminal 100 whereas the second camera 121' can be provided to the rear side of the mobile terminal 100.

The first and second cameras 121 and 121' may photograph opposite directions. For example, the first camera 121 can photograph the user who operates the mobile terminal 100 and the second camera 121' can photograph the scene in front of the user.

The first and second images (I1 and I2 of FIG. 8) may be respectively captured by the first and second cameras 121 and 121'. For example, the first image (I1 of FIG. 8) can be an image of the user who operates the mobile terminal 100, whereas the second image (I2 of FIG. 8) can be an image of the scene in front of the user, captured using the second camera 121' by the user.

Operations of the mobile terminal 100 are described on the assumption that the first and second cameras 121 and 121' are operating. Accordingly, the first and second images (I1 and I2 shown in FIG. 8) may be captured by the first and second cameras 121 and 121'. The controller 180 of the mobile terminal 100 may select an image to be displayed on the display 151 and/or an image to be stored from the first and second images (I1 and I2 shown in FIG. 8) which are being captured.

An image selection signal is then acquired (S50). The image selection signal may be a signal corresponding to operation of the user and/or control of the controller 180 to select an image from the first and second images (I1 and I2 shown in FIG. 8). The image selection signal according to an operation of the user can include voice, a gesture, change of the orientation of the mobile terminal 100, etc. The image selection signal may also be a combination of operations performed on the mobile terminal 100 through various methods.

An image to be stored is then determined based on the image selection signal (S70), and the determined image may be recorded (S90).

As described above, the image selection signal determines an image which is selected from the captured images and stored. The controller 180 may store the image determined based on the image selection signal in the memory 160. The stored image may be transmitted to another mobile terminal 100 through the wireless communication unit 110.

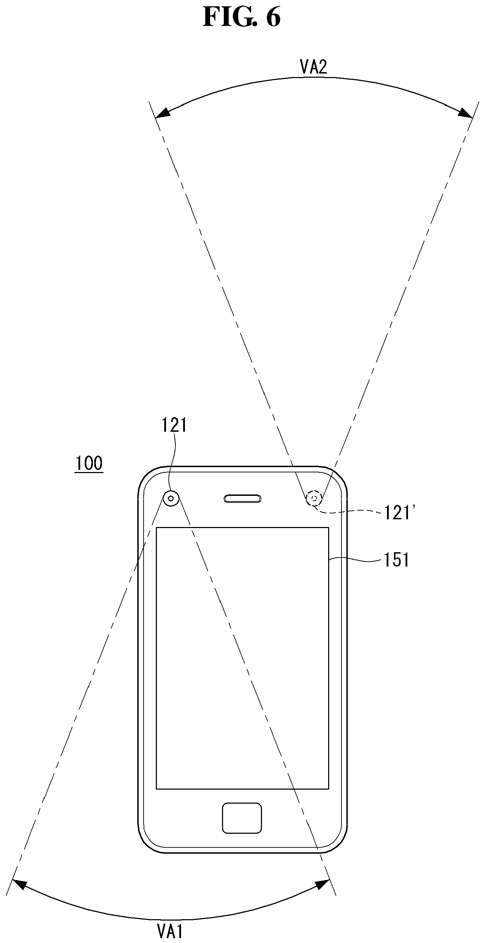

Next, FIG. 6 shows photographing directions of the first and second cameras of the mobile terminal 100 of FIG. 1. Referring to FIG. 6, the mobile terminal 100 can photograph a first area VA1 through the first camera 121 provided to the front side of the mobile terminal 100 and photograph a second area VA2 through the second camera 121' provided to the rear side of the mobile terminal 100. The first area VA1 and the second area VA2 may be opposite areas.

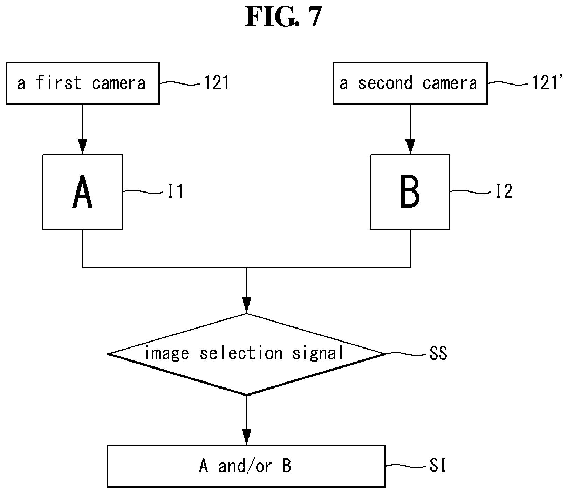

Next, FIG. 7 is a flowchart illustrating a process of selecting at least one of images captured by the first and second cameras of the mobile terminal of FIG. 6. As shown in FIG. 7, the controller 180 may capture the first and second images I1 and I2 using the first and second cameras 121 and 121'. The controller 180 may select one of the first and second images I1 and I2 (SI) according to the image selection signal (SS). A description will be given of examples of the image selection signal.

In particular, FIGS. 8 to 13 illustrate operations of changing the first and second images in the mobile terminal of FIG. 1. As shown in FIGS. 8 to 13, the controller 180 may display a specific one of the first and second images I1 and I2 on the display 151 and/or store the specific image according to selection of the user and/or control operation of the controller 180.

Referring to FIG. 8(a), the first image I1 which is an image of the user of the mobile terminal 100, captured using the first camera 121, may be displayed on the display 151. The image I2 captured using the second camera 121' may be displayed in a pop-up window P of the display 151.

The controller 180 may display a recording indicator RI around the image selected from the first and second images I1 and I2. The recording indicator RI may indicate the image currently being recorded from among the first and second images I1 and I2.

In addition, the recording indicator RI can be distinguished from other parts of the display 151 by means of the thickness and color of the line thereof, which are different from those of the other parts. In FIG. 8(a), for example, the recording indicator RI is displayed around the first image I1 such that the user can intuitively recognize that the first image I1 is being recorded.

While the first image I1 is recorded, the user can select the pop-up window P with a finger F. Referring to FIG. 8(b), upon selection of the pop-up window P, the controller 180 may change positions of the first and second images I1 and I2. That is, the controller 180 can display the second image I2 that has been displayed in the pop-up window P in the main area of the display 151 and display the first image I1 in the pop-up window P in a small size. In this instance, if the recording indicator RI is displayed on the main area of the display 151, it indicates that the second image I2 is being recorded.

Referring to FIG. 8(c), the controller 180 can change the position of the recording indicator RI in response to selection of the pop-up window P. That is, the controller 180 can move the recording indicator RI displayed on the main area of the display 151 to the pop-up window P. Upon change of the position of the recording indicator RI, recording of the second image I2 corresponding to the recording indicator RI can be started.

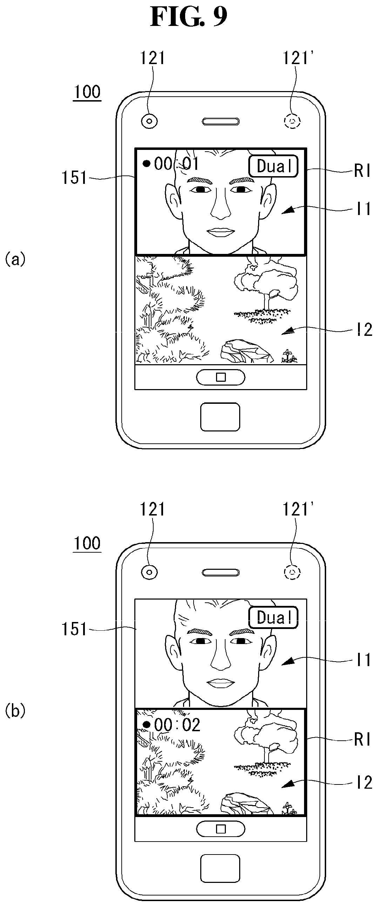

Referring to FIGS. 9(a) and 9(b), the first and second images I1 and I2 may be displayed in divided areas of the display 151. For example, the first image I1 can be displayed in the upper area of the display 151 whereas the second image I2 can be displayed in the lower area of the display 151.

The user can select a desired image from the first and second images I1 and I2. For example, the user can select the area in which the first image I1 is displayed or the area in which the second image I2 is displayed so as to record the image corresponding to the selected area.

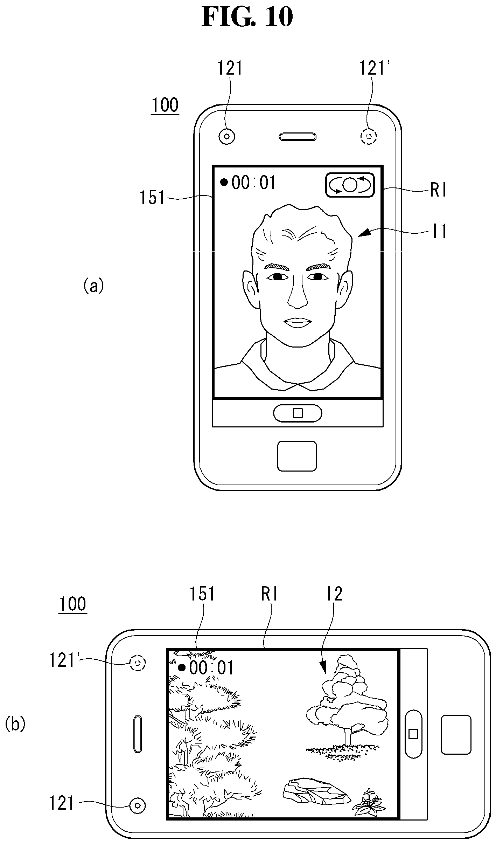

Referring to FIG. 10, the controller 180 may selectively record images captured using different cameras according to rotation of the mobile terminal 100. Referring to FIG. 10(a), the first image I1 captured using the first camera 121 can be displayed on the display 151. Furthermore, the first image I1 may be being stored as indicated by the recording indicator RI.

Referring to FIG. 10(b), when the mobile terminal 100 is turned to the horizontal direction, the controller 180 can display the second image I2 captured using the second camera 121'. The second image may be being stored as indicated by the recording indicator RI.

In addition, outdoor scenes are generally captured as images in the landscape form. In view of this, the controller 180 can record an image of an outdoor scene, captured using the second camera 121', when the mobile terminal 100 is turned to the horizontal direction. That is, the controller 180 can select an image to be stored according to the image selection signal based on information about a posture of the mobile terminal 100, sensed through the posture detection sensor 142.

Thus, the convenience of operation of the mobile terminal 100 is improved because an image to be recorded can be automatically selected depending on the posture of the mobile terminal.

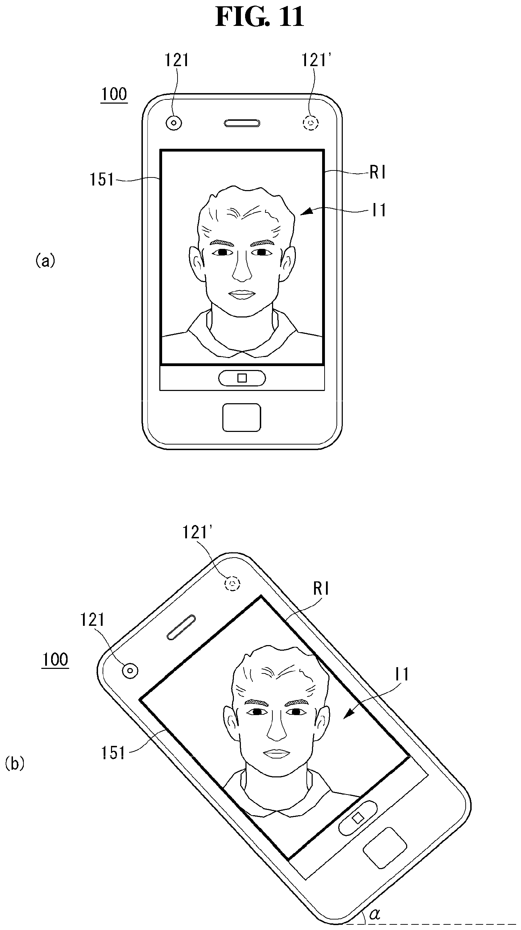

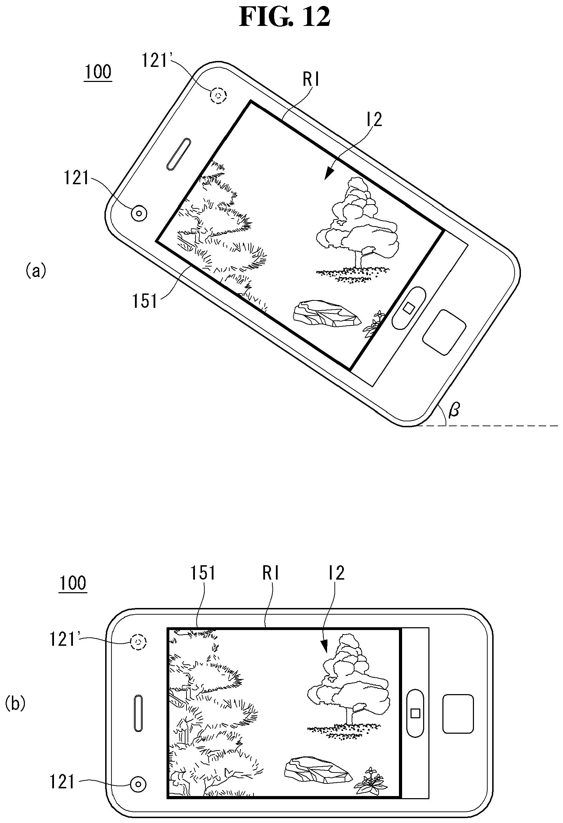

Referring to FIGS. 11 and 12, the images captured by the first and second cameras 121 and 121' may be changed during rotation of the mobile terminal 100. In particular, referring to FIG. 11(a), the first image I1 captured using the first camera 121 may be displayed.

Referring to FIG. 11(b), the first image I1 captured through the first camera 121 may be displayed until the mobile terminal 100 is tilted by a first angle α. That is, the first image I1 may be displayed on the display 151 and/or recorded.

Referring to FIG. 12(a), when the mobile terminal 100 is tilted by a second angle β, the controller 180 may select the second image I2 captured through the second camera 121'. That is, the second image I2 can be displayed on the display 151 and/or recorded. The second angle β may be greater than the first angle α.

Referring to FIG. 12(b), when the mobile terminal 100 is positioned in the landscape form, the controller 180 can select the second image I2 captured through the second camera 121' and display and/or record the selected second image I2. The controller 180 of the mobile terminal 100 according to an embodiment of the present invention can select a specific image from the first and second images I1 and I2 based on a tilting degree of the body of the mobile terminal 100, thereby improving the convenience of using the mobile terminal.

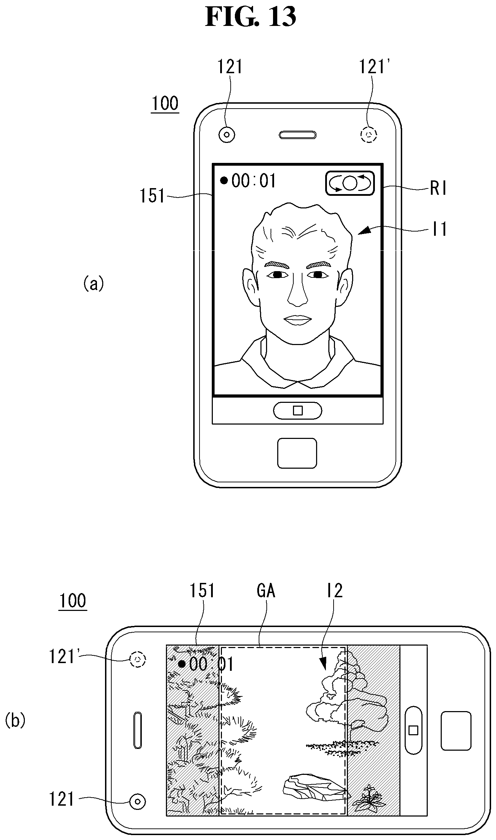

As shown in FIG. 13, the controller 180 may display an image captured in the portrait form and an image captured in the landscape form such that resolutions of the two images correspond to each other. That is, the width/length ratio of the portrait image and the width/length ratio of the landscape image can correspond to each other.

For example, when the width/length ratio of the first image is 200*100, the second image can be captured at a width/length ratio of 200*100. When the first and second images have the same width/length ratio, the first and second images can be easily edited.

Referring to FIG. 13(a), the mobile terminal 100 may capture the first image I1 using the first camera 121. Referring to FIG. 13(b), when the body of the mobile terminal 100 is positioned in the landscape form, the controller 180 can select the second image I2 captured using the second camera 121' and display and/or record the second image I2.

The controller 180 may display a guide indicator GA on the second image I2. The guide indicator GA can indicate that parts of the second image I2 in the landscape form may be edited. For example, the guide indicator GA can indicate that left and right parts of the second image I2 are cropped such that the resolution of the second image I2 is changed to allow the second image I2 and the first image I1 to be continuously edited.

When the left and right parts of the second image I2 are cropped and thus the resolution of the second image I2 corresponds to the resolution of the first image I1, continuity of edition of the first image I1 and the second image I2 can be maintained.

For example, if the first image I1 has a width/length ratio of 100*200 and the second image I2 has a width/length ratio of 200*100, one of the first and second images I1 and I2 are adjusted in order to edit the first and second images I1 and I2 to generate one image. During the adjustment process, the image that is considered to be important by the user may be damaged.

Accordingly, the mobile terminal 100 according to an embodiment of the present invention can correctly capture a desired image of the user by displaying a cropped area of the captured image. While FIG. 13 illustrates the guide indicator GA displayed when portrait capturing changes to landscape capturing, the guide indicator GA may be displayed when landscape capturing changes to portrait capturing.

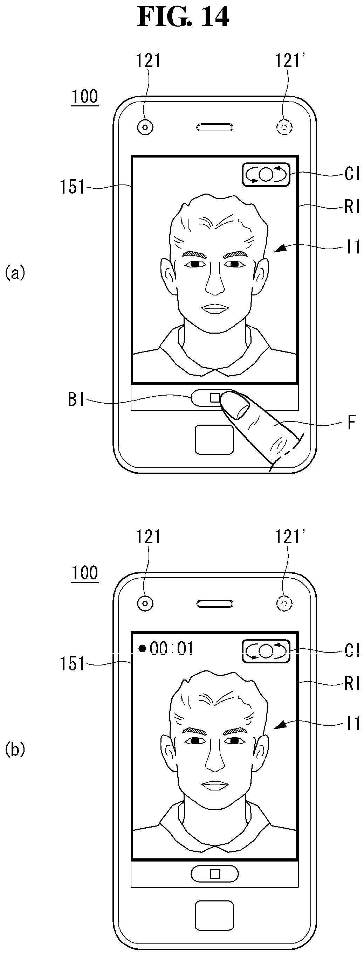

Next, FIGS. 14 to 16 illustrate recording of an image in the mobile terminal of FIG. 1. As shown in FIGS. 14 to 16, the controller 180 may select a specific image according to the image selection signal based on an operation of the user and display and/or record the selected image.

Referring to FIG. 14(a), the first image I1 captured through the first camera 121 may be displayed on the display 151. An image change icon CI may be displayed on the display 151. Upon selection of the image change icon CI, the controller 180 can display an image captured by the other camera. The user can select a recording start button B1 with the finger F.

Referring to FIG. 14(b), upon selection of the recording start button B1, the controller 180 can display the recording indicator RI and record the currently displayed image. A recording time may be displayed as numerals on the display 151.

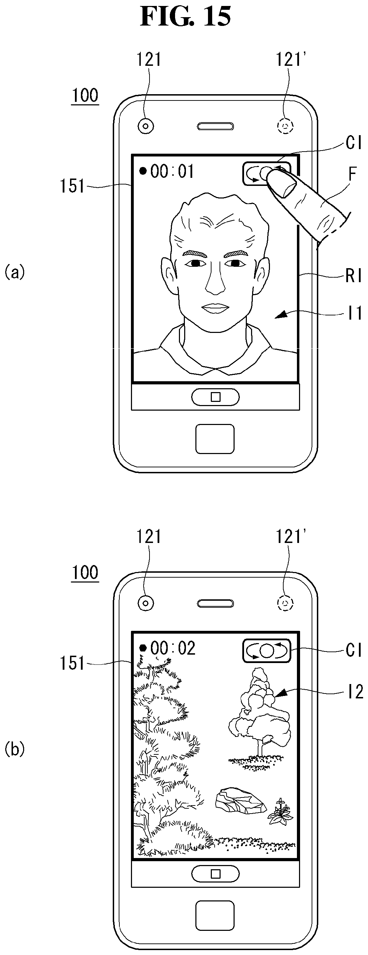

Referring to FIG. 15(a), the user may select the image change icon CI with the finger F. Referring to FIG. 15(b), upon selection of the image change icon CI, the controller 180 can display the second image I2 captured by the second camera 121', instead of the first image I1. If the recording indicator RI is not displayed, the first image I1 is recorded though the second image I2 is displayed on the display 151. That is, display and recording can be separated from each other.

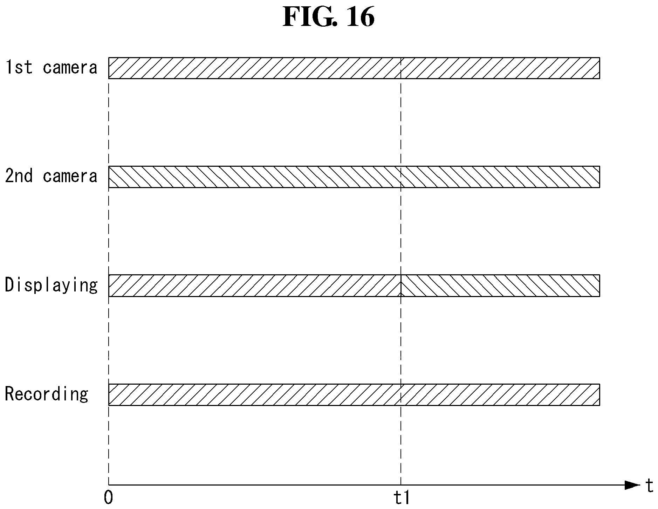

Referring to FIG. 16, the image captured through the first camera 121, the image captured by the second camera 121', the image displayed on the display 151, and the recorded image may be indicated by time lines.

In FIG. 16, t1 may correspond to a time when the user selects the image change icon CI. The image displayed on the display 151 can be changed based on t1. That is, the image displayed on the display 151 can be changed from the first image I1 to the second image I2 at t1. As indicated by the time lines, the image displayed on the display 151 and the recorded image may become different from each other at a specific time.

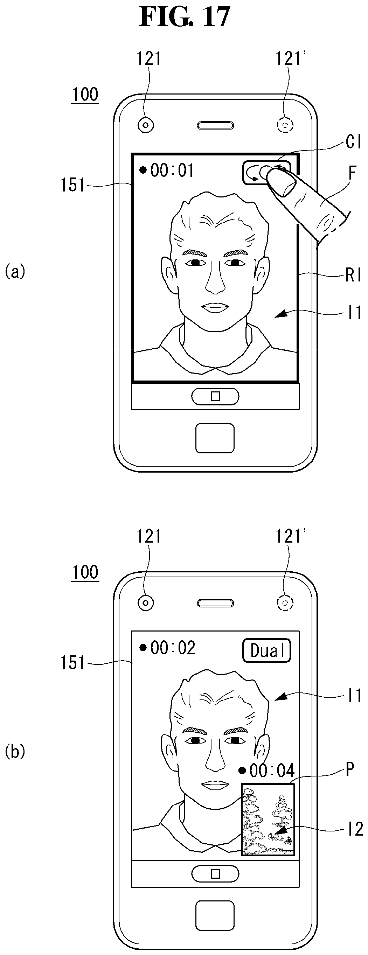

Next, FIGS. 17 to 23 illustrate operations of changing the first and second images in the mobile terminal of FIG. 1. As shown in FIGS. 17 to 23, the controller 180 may select one of first and second images I1 and I2 according to image selection signals in various forms.

Referring to FIG. 17(a), the controller 180 may display the first image I1 captured by the first camera 121 on the display 151. The user may select the image change icon CI with the finger F.

Referring to FIG. 17(b), upon selection of the image change icon CI, the controller 180 can display the second image I2 captured by the second camera 121' in the pop-up window P. In this state, if the user selects the image change icon CI again, the display positions of the first and second images I1 and I2 can be changed. Since the recording indicator RI is displayed around the first image I1, the user can intuitively recognize that the first image I1 is being recorded.

After display of the second image I2 in the pop-up window P, the image change icon CI can be changed to a dual icon DI. The dual icon DI may relate to a function of displaying the pop-up window P or not.

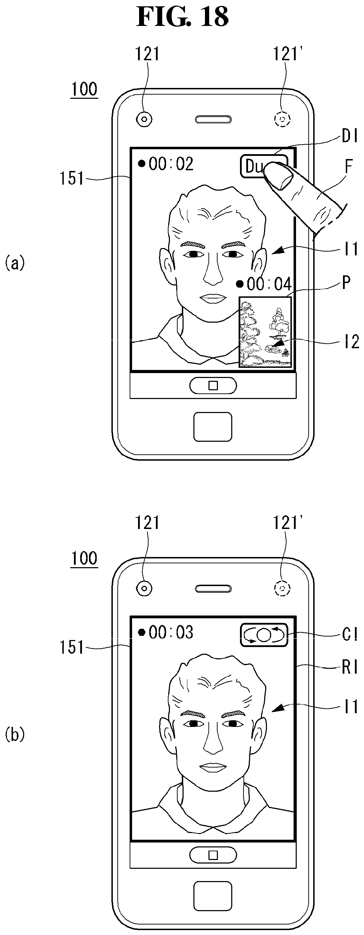

Referring to FIG. 18(a), the user may select the dual icon DI with the finger F. Referring to FIG. 18(b), upon selection of the dual icon DI, the controller 180 can cancel display of the pop-up window P. Furthermore, the dual icon DI can be changed to the image change icon CI corresponding to a different function.

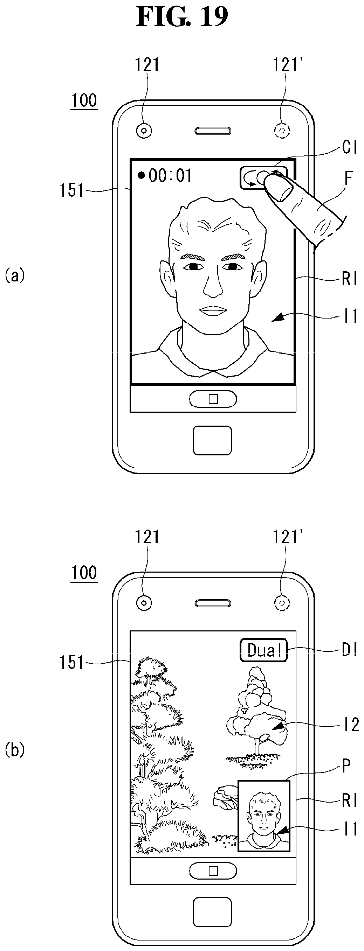

Referring to FIG. 19(a), the first image I1 captured by the first camera 121 and the image change icon CI may be displayed on the display 151. Referring to FIG. 19(b), upon selection of the image change icon CI, the controller 180 can move the first image I1 displayed in the main area of the display 151 to the pop-up window P and display the second image I2 in the main area of the display 151. Here, the controller 180 can display the recording indicator RI around the pop-up window P to indicate that the first image I1 displayed in the pop-up window P is being recorded.

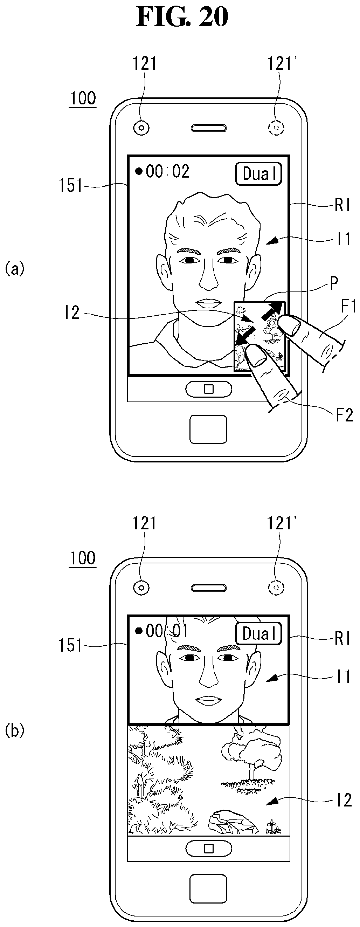

FIGS. 20 to 23 illustrate a procedure of selecting an image display form through multiple touches performed on a specific point on the display 151.

Referring to FIG. 20(a), the user may perform a multi-touch operation on the pop-up window P displaying the second image I2 using first and second fingers F1 and F2. The multi-touch operation may be a touch operation performed in a direction in which the first and second fingers F1 and F2 move apart from each other. The first image I1 may be recorded when the multi-touch operation is performed.

Referring to FIG. 20(b), upon execution of the multi-touch operation on the pop-up window P in the direction in which the first and second fingers F1 and F2 move apart from each other, the controller 180 can divide the screen of the display 151 and respectively display the first and second images I1 and I2 in the divided areas. For example, the controller 180 can display the second image I2 that has been displayed in the pop-up window P in an area corresponding to half of the screen of the display 151 along with the first image I1.

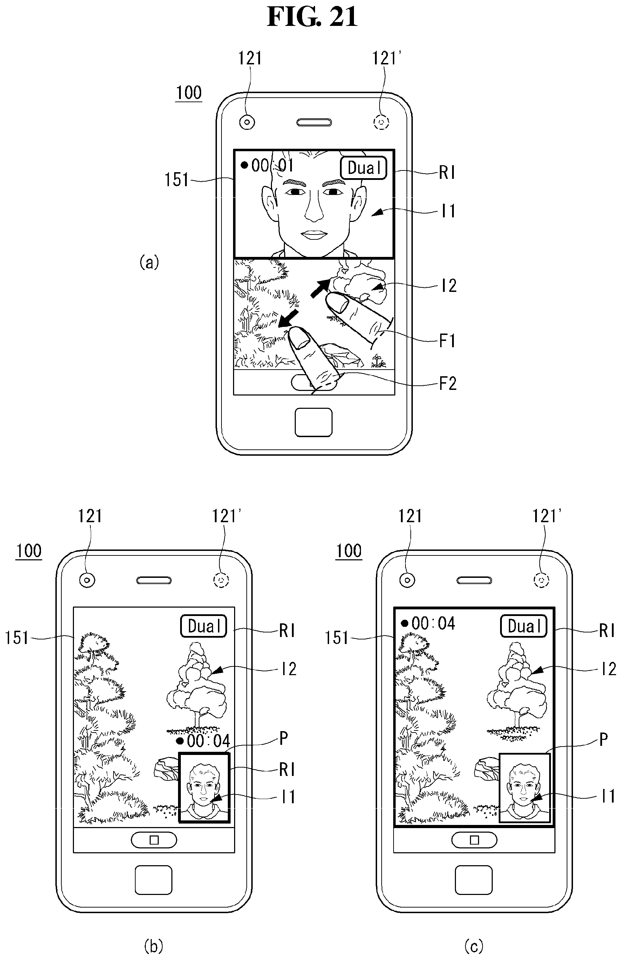

Referring to FIG. 21(a), the user may perform a multi-touch operation on the second image I2 using the first and second fingers F1 and F2 in a direction in which the first and second fingers F1 and F2 move apart from each other.

Referring to FIG. 21(b), when the multi-touch operation is performed on the second image I2, the controller 180 can display the second image I2 in the main area of the display 151. Furthermore, the controller 180 can display the first image I1 in the pop-up window P. Here, the recording indicator RI can be continuously displayed around the first image I1 which is being recorded.

Referring to FIG. 21(c), when the multi-touch operation is performed on the second image I2, the controller 180 can display the second image I2 in the main area of the display 151. Here, the controller 180 can display the recording indicator RI around the second image I2 displayed on the main area. That is, the image displayed in the main area can be automatically recorded.

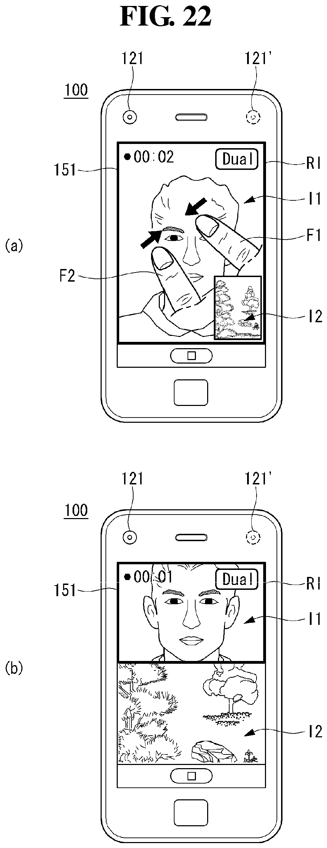

Referring to FIG. 22(a), the user may perform a multi-touch operation on the first image I1 displayed in the main area and recorded. The multi-touch operation may be a touch operation performed in a direction in which the first ands second fingers F1 and F1 become close to each other.

Referring to FIG. 22(b), when the multi-touch operation is performed on the first image I1, the controller can divide the screen of the display 151 and respectively display the first and second images I1 and I2 in the divided areas of the display 151.

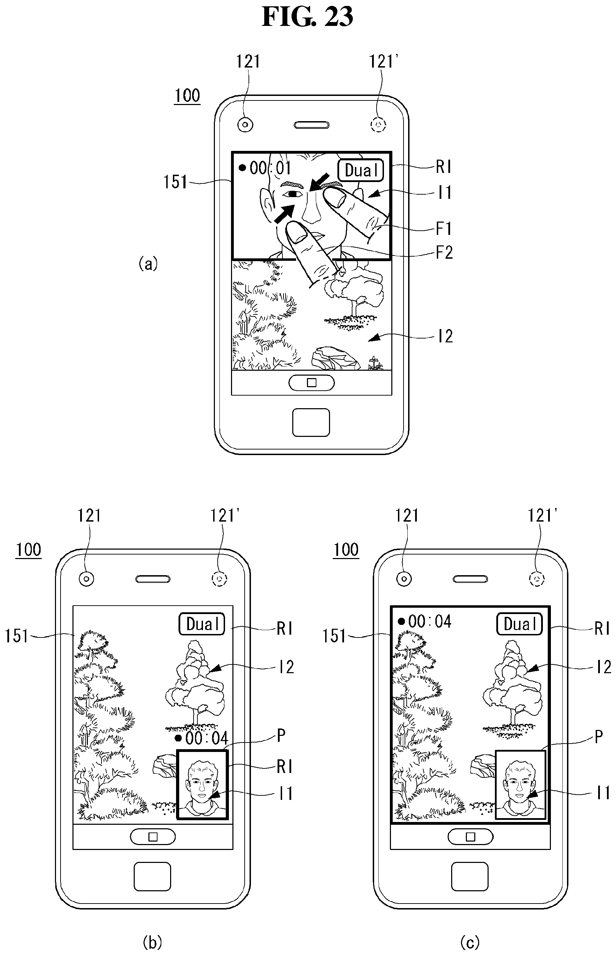

Referring to FIG. 23(a), the user may perform a multi-touch operation on the first image I1 in a direction in which the first and second fingers F1 and F2 become close to each other. The first image I1 may be recorded when the multi-touch operation is performed.

Referring to FIG. 23(b), when the multi-touch operation is performed on the first image I1, the controller can display the first image I1 in the pop-up window P and display the second image I2 in the main area of the display 151. Here, the controller 180 can continuously record the first image I1 and display the recording indicator RI around the first image I1 to indicate continuous recoding of the first image I1.

Referring to FIG. 23(c), when the multi-touch operation is performed on the first image I1, the controller 180 can display the first image I1 in the pop-up window P. Here, the controller 180 can store the second image I2 displayed in the main area of the display 151, instead of the first image I1.

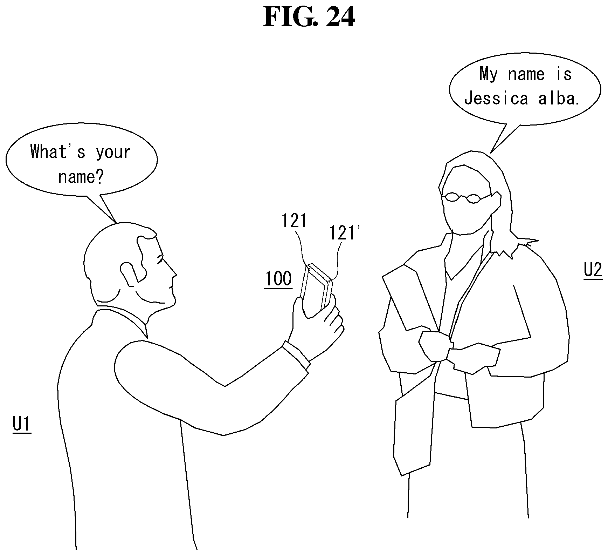

FIGS. 24 to 27 illustrate operations of changing the first and second images according to voice and a gesture in the mobile terminal shown in FIG. 1.

As shown in FIGS. 24 to 27, the controller 180 may select an image to be displayed and/or recorded, according to an image selection signal based on a voice command and/or a gesture of the user of the mobile terminal 100 and/or a person who is photographed by the user.

Referring to FIG. 24, a first user U1 may be located in front of the mobile terminal 100 and a second user U2 may be located behind the mobile terminal 100. That is, the first user U1 may be located in a position captured by the first camera 121 and the second user U2 may be located in a position captured by the second camera 121'. The first user U1 may photograph the second user U2 while gripping the mobile terminal 100. The first user U1 and the second user U2 may talk to each other during photographing.

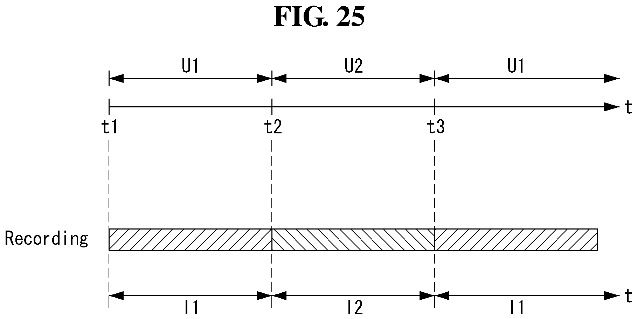

Referring to FIG. 25, the controller 180 may store an image of a user who is talking. For example, the first user U1 can talk from t1 to t2, the second user U2 can talk from t2 to t3, and the first user U1 can talk after t3. In this instance, the controller 180 can record an image of the first user U1 from t1 to t2, record an image of the second user U2 from t2 to t3 and record the image of the first user U1 again after t3. That is, the controller 180 can record an image of a user who is talking based on voice acquired through the microphone 122.

Information about a user who is talking may be acquired from image information. For example, it is possible to determine whether a user who is photographed is talking by analyzing the shape of the mouse of the user.

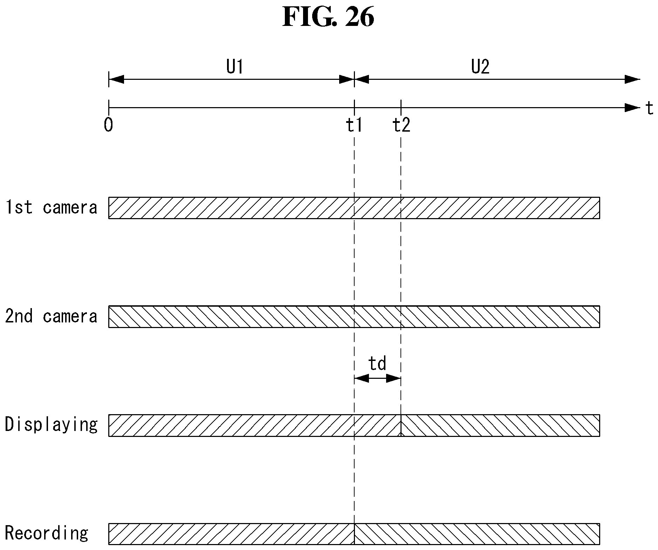

Referring to FIG. 26, the controller 180 can compensate for time delay generated during image change.

The second user U2 may start to talk at t1. Here, time delay td may be generated in an image displayed on the display 151 due to the processing speed of the controller 180. That is, the image of the first user U1 is changed to the image of the second user U2 after time delay td caused by image processing, generated at t1, rather than the image of the first user U1 is immediately changed to the image of the second user U2 at t1.

Even when time delay td is generated in the image displayed on the display 151, the controller 180 can prevent time delay td from being generated in a stored image. That is, since the first and second cameras 121 and 121' continuously capture images, the controller 180 can store the image captured by the second camera 121' after t1 by editing the continuously captured images. Accordingly, time delay td is not generated in the stored image even if time delay td is generated in the displayed image.

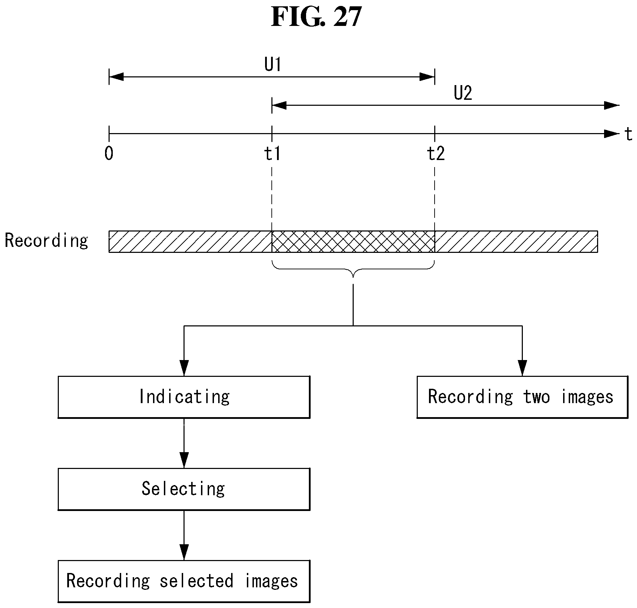

Referring to FIG. 27, the first user U1 and the second user U2 may simultaneously talk. For example, the first user U1 and the second user U2 can simultaneously talk from t1 to t2.

In this instance, the controller 180 can determine an image to be displayed and/or recorded through various methods. The controller 180 can indicate voice overlap. For example, the controller 180 can indicate voice overlap to the user by displaying an icon on the display 151. The user can select a specific voice and/or image upon recognizing the voice overlap. The controller 180 can store the selected voice and/or image.

The controller 180 can simultaneously record a plurality of images. For example, the controller 180 can divide the screen of the display 151 and display a plurality of images during voice overlap.

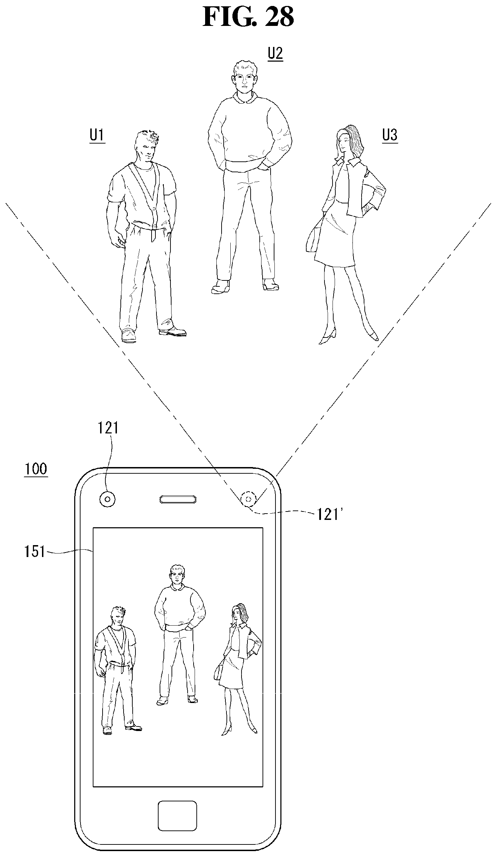

FIGS. 28 to 30 illustrate an operation of the mobile terminal of FIG. 1 in a conference mode. As shown in FIGS. 28 to 30, the controller 180 of the mobile terminal 100 may record an image of a plurality of users in the conference mode in which the plurality of users is photographed.

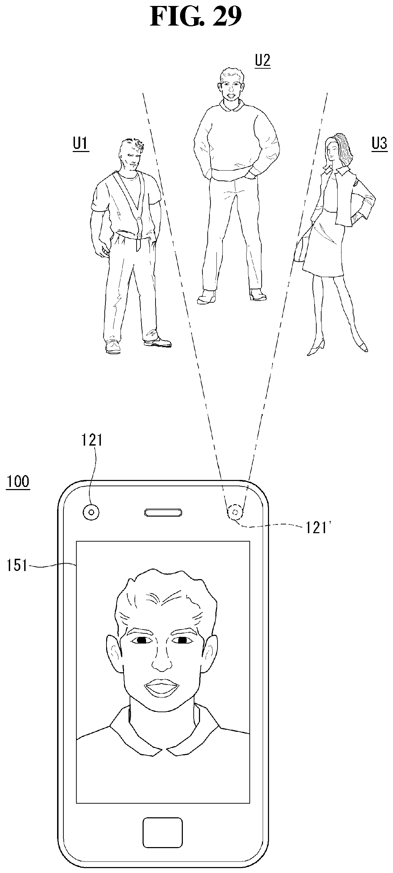

Referring to FIG. 28, the mobile terminal 100 may capture an image of first to third users U1 to U3. Referring to FIG. 29, the second user U2 among the first to third users U1 to U3 may talk. When the second user U2 talks, the controller 180 can zoom in on the second user U2. Accordingly, it is possible to achieve more effective display and/or recording by zooming in on a user who is talking.

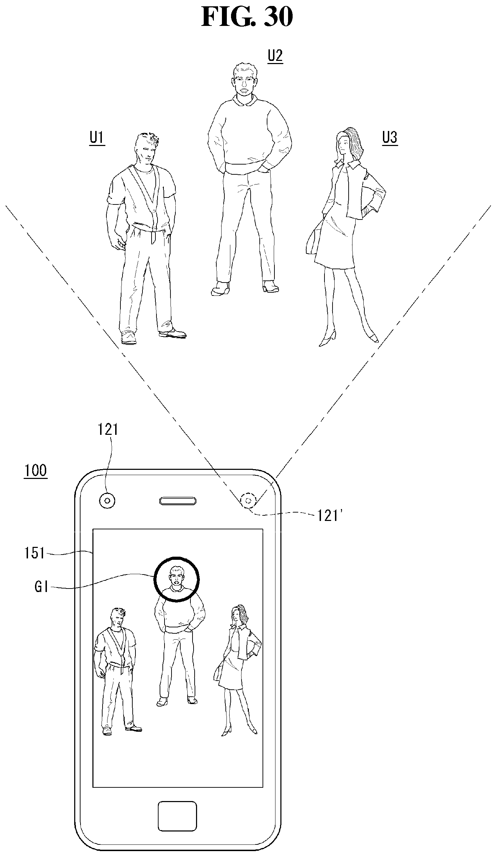

A specific user who is talking may be selected by analyzing the direction of voice and/or an image being captured. Referring to FIG. 30, the controller 180 can display an indicator GI that indicates a user who is talking. For example, when the second user U2 is talking, the controller 180 can display the indicator GI that indicates the second user U2.

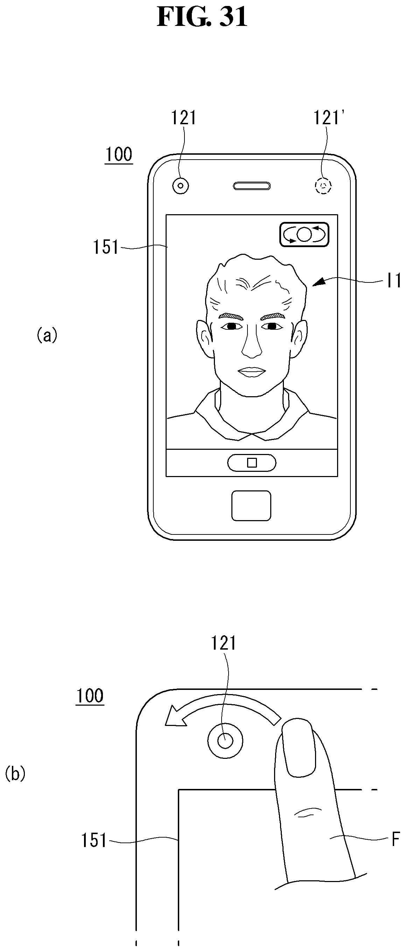

FIGS. 31 to 35 illustrate an operation of the mobile terminal of FIG. 1 according to a gesture performed on the cameras of the mobile terminal. As shown in FIGS. 31 to 35, the controller 180 of the mobile terminal 100 can select a specific image based on a gesture performed on the first and second cameras 121 and 121'.

Referring to FIG. 31(a), the user may capture an image of his/her own using the first camera 121 and store the captured image. Referring to FIG. 31(b), the user can sweep the first camera 121 using the finger F. For example, the user can shield the first camera 121 by sweeping the camera with the finger F from right to left. When the camera 121 is shielded, the camera 121 cannot normally capture an image.

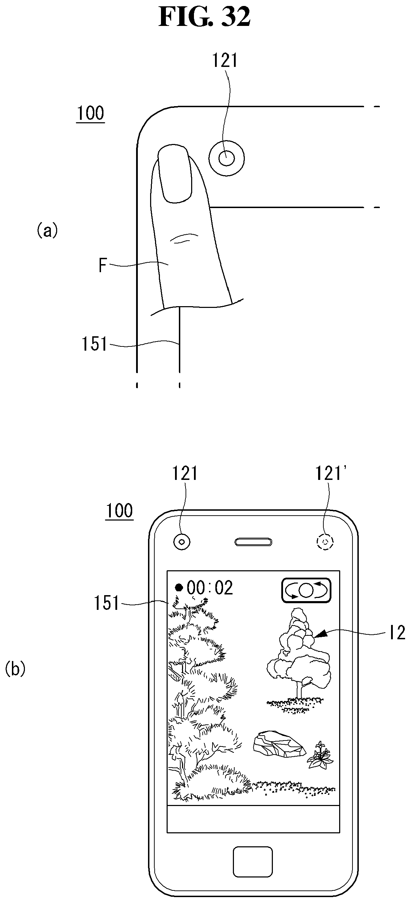

Referring to FIG. 32(a), upon completion of the sweeping gesture, the finger F may be located on the left of the camera 121. Referring to FIG. 32(b), when the sweeping gesture is performed on the first camera 121 that captures an image of the user, the controller 180 can select the second image I2 captured by the second camera 121' and display and/or record the second image I2. That is, an image to be displayed and/or recorded can be selected by a gesture of the user performed on at least one of the cameras 121 and 121'.

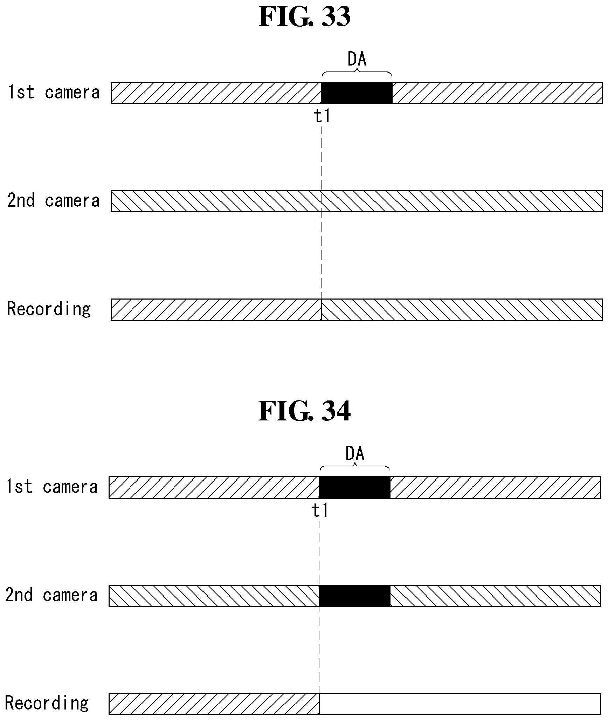

Referring to FIG. 33, a gesture of sweeping the first camera 121 in front of the first camera 121 may generate a dark area DA in the image captured by the first camera 121. The controller 180 can record the image captured by the second camera 121', instead of the image captured by the first camera 121, from t1 at which the dark area DA starts to generate.

Referring to FIG. 34, it is possible to sweep both the first and second cameras 121 and 121'. In this instance, the dark area DA may be generated in both images captured by the first and second cameras 121 and 121'.

When the dark area DA is present in both the images captured by the first and second cameras 121 and 121', the controller 180 can interrupt image recording. For example, the controller 180 can interrupt image recording from t1 at which the dark area DA starts to generate. The controller 180 may interrupt display of an image.

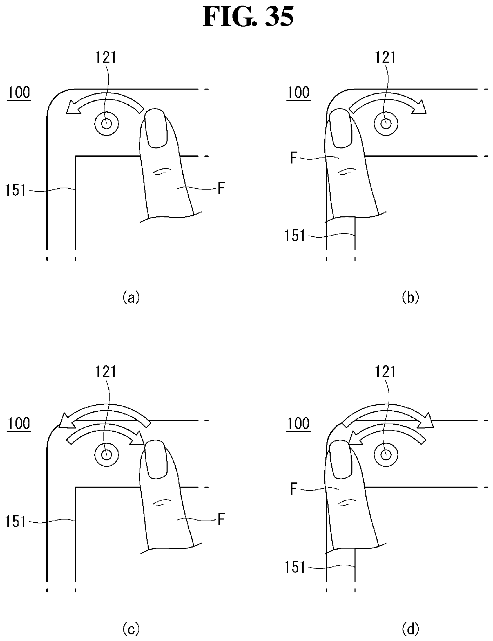

Referring to FIG. 35, a sweeping gesture may be performed in various manners, and different functions may be executed according to various sweeping gestures.

Referring to FIG. 35(a), the user can sweep the first camera 121 from right to left using the finger F. This sweeping gesture may be a gesture for interrupting display and/or recording of an image captured by a specific camera. Referring to FIG. 35(b), the user can sweep the first camera 121 from left to right using the finger F. This sweeping gesture may be a gesture for resuming interrupted display and/or recording of an image.

Referring to FIGS. 35(c) and 35(d), the user can make a gesture of repeatedly sweeping the camera 121 from right to left and from left to right. This sweeping gesture may be a gesture for displaying/recording an image captured by a specific camera for a specific period of time, or executing or interrupting a specific function.

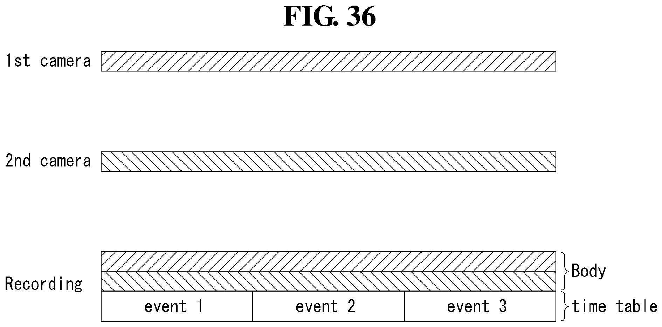

FIG. 36 illustrates a recording form in the mobile terminal shown in FIG. 1. Referring to FIG. 36, the controller 180 of the mobile terminal 100 can generate a recording file including a body corresponding to the image captured by the first camera 121 and the image captured by the second camera 121', and a time table that records generation time of a specific event.

That is, it is possible to record the first and second images I1 and I2 and additionally store event data about when voice of a specific user is input or when a sweeping gesture is made, rather than editing the first and second images I1 and I2 to generate a new image at the time when the first and second images I1 and I2 are generated. Because the first and second images I1 and I2 can be recorded, the images can be edited in various manners later.

The foregoing embodiments and features are merely exemplary in nature and are not to be construed as limiting the present invention. The disclosed embodiments and features may be readily applied to other types of apparatuses. The description of the foregoing embodiments is intended to be illustrative, and not to limit the scope of the claims. Many alternatives, modifications, and variations will be apparent to those skilled in the art.

The above-described method of controlling the mobile terminal may be written as computer programs and may be implemented in digital microprocessors that execute the programs using a computer readable recording medium. The method of controlling the mobile terminal may be executed through software. The software may include code segments that perform required tasks. Programs or code segments may also be stored in a processor readable medium or may be transmitted according to a computer data signal combined with a transmission medium or communication network.

The computer readable recording medium may be any data storage device that can store data that can be thereafter read by a computer system. Examples of the computer readable recording medium may include read-only memory (ROM), random-access memory (RAM), CD-ROMs, DVD±ROM, DVD-RAM, magnetic tapes, floppy disks, optical data storage devices. The computer readable recording medium may also be distributed over network coupled computer systems so that the computer readable code is stored and executed in a distribution fashion.

A mobile terminal may include a first touch screen configured to display a first object, a second touch screen configured to display a second object, and a controller configured to receive a first touch input applied to the first object and to link the first object to a function corresponding to the second object when receiving a second touch input applied to the second object while the first touch input is maintained.

A method may be provided of controlling a mobile terminal that includes displaying a first object on the first touch screen, displaying a second object on the second touch screen, receiving a first touch input applied to the first object, and linking the first object to a function corresponding to the second object when a second touch input applied to the second object is received while the first touch input is maintained.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A mobile terminal comprising:
a body;
first and second cameras respectively provided to opposite sides of the body;
a display configured to display images received by the first and second cameras;
a microphone configured to acquire a voice input from a person;
a posture detection sensor included in the body and configured to sense a motion of the body; and
a controller configured to store at least one of first and second images received by the first and second cameras based on an image selection signal,
wherein the image selection signal includes the sensed motion,
**characterized in that** the sensed motion corresponds to a tilting angle of the body, and
wherein the controller is further configured to change the stored image from the first image to the second image based on the tilting angle of the body.

2. The mobile terminal of claim 1, wherein the controller is further configured to display at least one of the first and second images on the display based on the image selection signal.

3. The mobile terminal as claimed in any one of claims 1 to 2, wherein the controller is further configured to capture the first and second images such that width/length ratios of the first and second images correspond to each other.

4. The mobile terminal as claimed in any one of claims 1 to 3, wherein, when the width/length ratios of the first and second images differ from each other, the controller is further configured to display a guide indicator on at least one of the first and second images indicating that an image is captured at the same width/length ratio as that of the other image according to the guide indicator.

5. The mobile terminal as claimed in any one of claims 1 to 4, wherein the controller is further configured to display the first and second images in first and second display areas of the display, respectively,
wherein the image selection signal corresponds to an indication of one of the first and second display areas, and
wherein the controller is further configured to store an image displayed in a wider display area from among the first and second display areas.

6. The mobile terminal as claimed in any one of claims 1 to 5, wherein the controller is further configured to store a previously recorded image regardless of display areas including the first and second images displayed on the display.

7. The mobile terminal as claimed in any one of claims 1 to 6, wherein the controller is further configured to store an image from among the first and second images including a person corresponding to the acquired voice input.

8. The mobile terminal as claimed in any one of claims 1 to 7, wherein the controller is further configured to enlarge and store the image of the person corresponding to the acquired voice.

9. The mobile terminal as claimed in any one of claims 1 to 7, wherein the controller is further configured to display an indicator indicating the person corresponding to the acquired voice on the display.

10. The mobile terminal as claimed in any one of claim 1 to 9, wherein the input gesture included in the image selection signal corresponds to a shielding gesture input of shielding at least one of the first and second cameras, the shielding gesture input is a sweeping gesture before the at least one of the first and second cameras with a finger.

11. The mobile terminal as claimed in any one of claim 1 or 10, wherein, upon the shielding gesture of shielding at least one of the first and second cameras, the controller is further configured to record the image captured by the other camera.

12. The mobile terminal as claimed in any one of claims 1, 10 or 11, wherein the controller is further configured to interrupt recording of an image upon the shielding gesture of shielding both the first and second cameras.

13. The mobile terminal as claimed in any one of claims 1 to 12, wherein the controller is further configured to store event information including information about when the image selection signal is generated along with the first and second images.

14. A method of controlling a mobile terminal, the method comprising:
displaying, via a display of the mobile terminal, images captured by first and second cameras a body respectively provided to opposite sides of a body of the mobile terminal; and
storing, via a controller of the mobile terminal, at least one of first and second images received by the first and second cameras based on an image selection signal,
wherein the image selection signal includes a sensed motion sensed by a posture detection sensor included in the body,
**characterized in that** the sensed motion included in the image selection signal corresponds to a tilting angle of the body, and
wherein the controller is further configured to change the stored image from the first image to the second image based on the tilting angle of the body.

## Patentansprüche

1. Mobiles Endgerät aufweisend:
einen Körper;
erste und zweite Kameras, die jeweils an gegenüberliegenden Seiten des Körpers bereitgestellt sind;
eine Anzeigeeinrichtung konfiguriert zum Anzeigen von Bildern, die von den ersten und zweiten Kameras aufgenommen sind;
ein Mikrofon konfiguriert zum Gewinnen einer Stimmeingabe von einer Person;
einen in dem Körper enthaltenen Positionsdetektionssensor konfiguriert zum Detektieren einer Bewegung des Körpers; und
eine Steuereinrichtung konfiguriert zum Speichern mindestens eines der ersten und zweiten Bilder, die von den ersten und zweiten Kameras aufgenommen sind, auf Basis eines Bildauswahlsignals,
wobei das Bildauswahlsignal die detektierte Bewegung aufweist,
**dadurch gekennzeichnet, dass** die detektierte Bewegung einem Neigungswinkel des Körpers entspricht, und
wobei die Steuereinrichtung ferner konfiguriert ist, auf Basis des Neigungswinkels des Körpers das gespeicherte Bild von dem ersten Bild zu dem zweiten Bild zu ändern.

2. Mobiles Endgerät nach Anspruch 1, wobei die Steuereinrichtung ferner konfiguriert ist, auf Basis des Bildauswahlsignals mindestens eines der ersten und zweiten Bilder auf der Anzeigeeinrichtung anzuzeigen.

3. Mobiles Endgerät nach einem der Ansprüche 1 bis 2, wobei die Steuereinrichtung ferner konfiguriert ist, die ersten und zweiten Bilder derart zu erfassen, dass Breite/Länge-Verhältnisse der ersten und zweiten Bilder einander entsprechen.

4. Mobiles Endgerät nach einem der Ansprüche 1 bis 3, wobei die Steuereinrichtung ferner konfiguriert ist, in dem Fall, dass sich die Breite/Länge-Verhältnisse der ersten und zweiten Bilder voneinander unterscheiden, an mindestens einem der ersten und zweiten Bilder einen Führungsindikator anzuzeigen, der angibt, dass ein Bild mit dem gleichen Breite/Länge-Verhältnis erfasst worden ist wie das des anderen Bilds gemäß dem Führungsindikator.

5. Mobiles Endgerät nach einem der Ansprüche 1 bis 4, wobei die Steuereinrichtung ferner konfiguriert ist, die ersten und zweiten Bilder jeweils in ersten und zweiten Anzeigebereichen der Anzeigeeinrichtung anzuzeigen,
wobei das Bildauswahlsignal einer Angabe eines der ersten und zweiten Anzeigebereiche entspricht, und
wobei die Steuereinrichtung ferner konfiguriert ist, ein Bild zu speichern, das in einem Anzeigebereich angezeigt ist, der von den ersten und zweiten Anzeigebereichen der breitere ist.

6. Mobiles Endgerät nach einem der Ansprüche 1 bis 5, wobei die Steuereinrichtung ferner konfiguriert ist, ungeachtet der Anzeigebereiche ein vorher aufgezeichnetes Bild einschließlich der auf der Anzeigeeinrichtung angezeigten ersten und zweiten Bilder zu speichern.

7. Mobiles Endgerät nach einem der Ansprüche 1 bis 6, wobei die Steuereinrichtung ferner konfiguriert ist, von den ersten und zweiten Bildern ein Bild zu speichern, das eine Person aufweist, die der gewonnenen Stimmeingabe entspricht.

8. Mobiles Endgerät nach einem der Ansprüche 1 bis 7, wobei die Steuereinrichtung ferner konfiguriert ist, das Bild der Person, die der gewonnenen Stimme entspricht, zu vergrößern und zu speichern.

9. Mobiles Endgerät nach einem der Ansprüche 1 bis 7, wobei die Steuereinrichtung ferner konfiguriert ist, auf der Anzeigeeinrichtung ein Hinweiszeichen anzuzeigen, das auf die Person hinweist, die der gewonnenen Stimme entspricht.

10. Mobiles Endgerät nach einem der Ansprüche 1 bis 9, wobei die Eingabegeste, die in dem Bildauswahlsignal enthalten ist, einer Abschirmgeste-Eingabe eines Abschirmens mindestens einer der ersten und zweiten Kameras entspricht, wobei die Abschirmgeste-Eingabe eine Wischgeste vor der mindestens einen der ersten und zweiten Kameras mit einem Finger ist.

11. Mobiles Endgerät nach einem der Ansprüche 1 oder 10, wobei die Steuereinrichtung ferner konfiguriert ist, bei einer Abschirmgeste eines Abschirmens mindestens einer der ersten und zweiten Kameras das von der anderen Kamera erfasste Bild aufzuzeichnen.

12. Mobiles Endgerät nach einem der Ansprüche 1, 10 oder 11, wobei die Steuereinrichtung ferner konfiguriert ist, bei der Abschirmgeste eines Abschirmens sowohl der ersten wie auch der zweiten Kameras ein Aufzeichnen eines Bilds zu unterbrechen.

13. Mobiles Endgerät nach einem der Ansprüche 1 bis 12, wobei die Steuereinrichtung ferner konfiguriert ist, Ereignisinformation einschließlich Information darüber, wann das Bildauswahlsignal erzeugt worden ist, gemeinsam mit den ersten und zweiten Bildern zu speichern.

14. Verfahren zur Steuerung eines mobilen Endgeräts, wobei das Verfahren aufweist:
Anzeigen von Bildern, die von ersten und zweiten Kameras, die jeweils an gegenüberliegenden Seiten eines Körpers des mobilen Endgeräts bereitgestellt sind, erfasst sind, mit Hilfe einer Anzeigeeinrichtung des mobilen Endgeräts; und
Speichern mindestens eines der ersten und zweiten Bilder, die von den ersten und zweiten Kameras aufgenommen sind, auf Basis eines Bildauswahlsignals mit Hilfe einer Steuereinrichtung,
wobei das Bildauswahlsignal eine detektiere Bewegung aufweist, die von einem in dem Körper enthaltenen Positionsdetektionssensor detektiert wird,
**dadurch gekennzeichnet, dass** die in dem Bildauswahlsignal enthaltene detektierte Bewegung einem Neigungswinkel des Körpers entspricht, und
wobei die Steuereinrichtung ferner konfiguriert ist, auf Basis des Neigungswinkels des Körpers das gespeicherte Bild von dem ersten Bild zu dem zweiten Bild zu ändern.

## Revendications

1. Terminal mobile comprenant :
un corps ;
des première et deuxième caméras disposées respectivement sur des côtés opposés du corps ;
un dispositif d'affichage pour afficher des images reçues par les première et deuxième caméras ;
un microphone configuré pour acquérir une entrée vocale provenant d'une personne ;
un capteur de détection de posture inclus dans le corps et configuré pour détecter un mouvement du corps ; et
un contrôleur configuré pour stocker au moins une des première et deuxième images reçues par les première et deuxième caméras sur la base d'un signal de sélection d'image,
dans lequel le signal de sélection d'image comprend le mouvement détecté,
**caractérisé en ce que** le mouvement détecté correspond à un angle d'inclinaison du corps, et
dans lequel le contrôleur est configuré en outre pour changer l'image stockée de la première image à la deuxième image sur la base de l'angle d'inclinaison du corps.

2. Terminal mobile selon la revendication 1, dans lequel le contrôleur est configuré en outre pour afficher au moins une des première et deuxième images sur l'affichage sur la base du signal de sélection d'image.

3. Terminal mobile selon l'une quelconque des revendications 1 à 2, dans lequel le contrôleur est configuré en outre pour capturer les première et deuxième images de manière que des rapports largeur/longueur des première et deuxième images correspondent l'un à l'autre.

4. Terminal mobile selon l'une quelconque des revendications 1 à 3, dans lequel, quand les rapports largeur/longueur des première et deuxième images diffèrent l'un de l'autre, le contrôleur est configuré en outre pour afficher un indicateur de guidage sur au moins une des première et deuxième images, indiquant qu'une image est capturée avec le même rapport largeur/longueur que celui de l'autre image en fonction de l'indicateur de guidage.

5. Terminal mobile selon l'une quelconque des revendications 1 à 4, dans lequel le contrôleur est configuré en outre pour afficher les première et deuxième images respectivement dans des première et deuxième zones d'affichage du dispositif d'affichage,
dans lequel le signal de sélection d'image correspond à une indication d'une des première et deuxième zones d'affichage, et
dans lequel le contrôleur est configuré en outre pour stocker une image affichée dans une zone d'affichage plus large parmi les première et deuxième zones d'affichage.

6. Terminal mobile selon l'une quelconque des revendications 1 à 5, dans lequel le contrôleur est configuré en outre pour stocker une image précédemment enregistrée indépendamment de zones d'affichage comprenant les première et deuxième images affichées sur le dispositif d'affichage.

7. Terminal mobile selon l'une quelconque des revendications 1 à 6, dans lequel le contrôleur est configuré en outre pour stocker une image parmi les première et deuxième images comprenant une personne correspondant à l'entrée vocale acquise.

8. Terminal mobile selon l'une quelconque des revendications 1 à 7, dans lequel le contrôleur est configuré en outre pour agrandir et stocker l'image de la personne correspondant à la voix acquise.

9. Terminal mobile selon l'une quelconque des revendications 1 à 7, dans lequel le contrôleur est configuré en outre pour afficher un indicateur indiquant la personne correspondant à la voix acquise sur le dispositif d'affichage.

10. Terminal mobile selon l'une quelconque des revendications 1 à 9, dans lequel le geste d'entrée compris dans le signal de sélection d'image correspond a une entrée de geste d'écran pour faire écran à au moins une des première et deuxième caméras, l'entrée de geste d'écran est un geste de balayage devant l'au moins une des première et deuxième caméras avec un doigt.

11. Terminal mobile selon l'une quelconque des revendications 1 à 10, dans lequel, lors du geste d'écran pour faire écran à au moins une des première et deuxième caméras, le contrôleur est configuré en outre pour enregistrer l'image capturée par l'autre caméra.

12. Terminal mobile selon l'une quelconque des revendications 1, 10 ou 11, dans lequel le contrôleur est configuré en outre pour interrompre l'enregistrement d'une image lors du geste d'écran à la fois des première et deuxième caméras.

13. Terminal mobile selon l'une quelconque des revendications 1 à 12, dans lequel le contrôleur est configuré en outre pour stocker des informations d'événement comprenant des informations relatives à quand le signal de sélection d'image est généré conjointement aux première et deuxième images.

14. Procédé de commande d'un terminal mobile, le procédé comprenant :
l'affichage, par le biais d'un dispositif d'affichage du terminal mobile, d'images capturées par des première et deuxième caméras disposées respectivement sur des côtés opposés d'un corps du terminal mobile ; et
le stockage, par le biais d'un contrôleur du terminal mobile, d'au moins une des première et deuxième images reçues par les première et deuxième caméras sur la base d'un signal de sélection d'image,
dans lequel le signal de sélection d'image comprend un mouvement détecté par un capteur de détection de posture inclus dans le corps,
**caractérisé en ce que** le mouvement détecté compris dans le signal de sélection d'image correspond à un angle d'inclinaison du corps, et
dans lequel le contrôleur est configuré en outre pour changer l'image stockée de la première image à la deuxième image sur la base de l'angle d'inclinaison du corps.
